(19) Europäisches Patentamt
European Patent Office
Office européen des brevets

(11) **EP 2 884 241 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
**G01D 5/36** *(2006.01)*     *G01D 5/26* *(2006.01)*

(21) Anmeldenummer: **14195642.5**

(22) Anmeldetag: **01.12.2014**

(54) **Positionsmesssystem und Verfahren zum Betrieb eines Positionsmesssystems**

Position sensing system and method of operating a position sensing system

Système de détection de position et procédé de fonctionnement d'un système de détection de position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013 DE 102013226070**

(43) Veröffentlichungstag der Anmeldung:
**17.06.2015 Patentblatt 2015/25**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**DE-A1- 19 810 282     US-A- 4 546 466
US-A- 4 964 727     US-A- 5 408 091**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 884 241 B1

**Beschreibung**

GEBIET DER TECHNIK

Die vorliegende Erfindung betrifft ein Positionsmesssystem mit mehreren Abtasteinheiten zur optischen Abtastung mindestens einer Maßverkörperung, wobei die Abtasteinheiten mit mehreren Lichtquellen und mehreren Detektoren optisch gekoppelt sind. Ferner betrifft die vorliegende Erfindung ein Verfahren zum Betrieb eines derartigen Positionsmesssystems.

STAND DER TECHNIK

Hochgenaue optische Positionsmesssysteme bestehen oftmals aus mehreren hochauflösenden Abtasteinheiten, die mit mehreren Lichtquellen und Detektoren optisch gekoppelt sind; zur optischen Kopplung sind hierbei oftmals Lichtleitfasern vorgesehen. Die optische Kopplung der verschiedenen Komponenten, z.B. mittels Lichtleitfasern, ist hierbei ein wesentlicher Bestandteil eines solchen hochgenauen Positionsmesssystems, da dadurch der Wärmeeintrag sehr gering gehalten werden kann. Meist verwenden derartige hochgenaue Positionsmesssysteme plattenförmige, zweidimensionale Maßverkörperungen, um bezüglich einer in einem zweidimensionalen XY-Verschiebebereich beweglichen Maschinenkomponente Positionswerte erzeugen zu können. Die dabei verwendeten Maßverkörperungen müssen hierbei in der Regel sehr genau kalibriert werden, wobei eine solche Kalibrierung durch zusätzliche, redundante Sensoren erfolgen kann, die in die jeweilige Maschine eingebrachte Kalibriernormale abtasten. Daneben gibt es auch die Möglichkeit, durch redundante Abtasteinheiten des Positionsmesssystems eine sog. Selbstkalibrierung der plattenförmigen Maßverkörperungen durchzuführen. Wichtig ist in diesem Fall, dass der Aufwand für solche zusätzlichen Abtasteinheiten möglichst gering gehalten wird. Dies ist jedoch insbesondere bei der notwendigen optischen Kopplung mittels Lichtleitfasern für die zusätzlichen Abtasteinheiten bislang kaum möglich.

Aus der DE 35 26 049 A1 ist eine Anordnung bzw. ein Positionsmesssystem bekannt, bei der das Licht einer Lichtquelle über eine Lichtleitfaser einem Zeitmultiplexer in Form eines Chopperrads zugeführt wird, der an seinen N Ausgängen zeitlich aufeinander folgende Lichtimpulse erzeugt; zur optischen Kopplung ist demzufolge auch hier eine Lichtleitfaser vorgesehen. Die Lichtimpulse werden anschließend räumlich getrennt N Sensoren zugeführt. Die durch die Sensoren modulierten Lichtimpulse werden in einem Demultiplexer in eine gemeinsame Detektionsfaser zusammengefasst und von einem einzelnen Detektor empfangen. Das in dieser Druckschrift vorgeschlagene Verfahren stellt i.w. ein Zeitmultiplexingverfahren dar. Als entscheidender Nachteil eines solchen Zeitmultiplexingverfahrens ist der erforderliche Zeitmultiplexer anzusehen, der als aktives Bauteil ausgebildet sein muss. Der Zeitmultiplexer kann hierbei entfernt von den Sensoren angebracht werden, was aber zur Folge hat, dass für N Sensoren entsprechend N optische Detektionskanäle bzw. Zuleitungen vom Zeitmultiplexer zu den Sensoren notwendig sind und der Aufwand entsprechend hoch wird. Alternativ könnte der Zeitmultiplexer auch räumlich benachbart zu den Sensoren angeordnet werden. Dann allerdings wird die Verlustleistung des aktiven Zeitmultiplexers eine hochgenaue Positionsbestimmung durch das Positionsmesssystem verhindern.

In der US 5,408,091 ist ein Positionsmesssystem mit optischen Sensoren beschrieben, das drei gepulste Lichtquellen mit unterschiedlichen Wellenlängen benötigt, deren Lichtimpulse in eine gemeinsame Lichtleitfaser eingekoppelt werden. In unmittelbarer Nähe von N Sensoren werden durch ein Faserspektrometer die Lichtimpulse entsprechend ihrer Wellenlänge getrennt. Die Lichtleitfaser, die die Lichtimpulse bei einer der drei Wellenlängen überträgt, wird in einem Faserkoppler in N Lichtleitfasern aufgespalten und über entsprechend unterschiedliche Verzögerungsstrecken den N Sensoren zugeführt. Diese erhalten damit zeitlich aufeinander folgende Lichtimpulse. Die durch die Sensoren modulierten Lichtimpulse werden ebenfalls über Lichtleitfasern abgeleitet und in einem Faserkoppler zu einer einzigen Lichtleitfaser zusammengefasst. Der nachgeschaltete Detektor erhält damit zeitlich nacheinander folgende Lichtimpulse, die den einzelnen Sensoren zugeordnet werden. Dieses Verfahren stellt somit wiederum ein Zeitmultiplexingverfahren dar, wobei hier durch entsprechend unterschiedliche Verzögerungsstrecken die zeitliche Verschiebung erfolgt. Eine solche zeitliche Verschiebung benötigt aufgrund der Lichtgeschwindigkeit sehr große Längen der Lichtfasern, um einen zeitlichen Abstand der Lichtimpulse zu gewährleisten, der elektronisch detektierbar ist. Der Aufwand und der Platzbedarf für ein derartiges Positionsmesssystem ist entsprechend hoch.

Eine hierzu ähnliches Positionsmesssystem ist auch aus der US 5,498,867 bekannt. In Erweiterung des bekannten Prinzips aus der US 5,408,091 werden dort die Lichtimpulse einer spektral breitbandigen Lichtquelle in eine Lichtleitfaser eingekoppelt und in einem Faserspektrometer in M spektral schmalbandige Lichtimpulse übergeführt. Diese spektral schmalbandigen Lichtimpulse werden über separate Lichtleitfasern M Gruppen von Sensoren zugeführt. Jede der M Gruppen von Sensoren enthält einen Faserkoppler, der die Lichtleitfaser jeweils in N Lichtleitfasern aufspaltet und über unterschiedliche Verzögerungsstrecken den N Sensoren jeder Gruppe zuführt. Somit werden M x N Sensoren von einer Lichtquelle bzw. von einer Lichtleitfaser aus versorgt. Die von den M x N Sensoren modulierten Lichtimpulse werden über einen Faserkoppler in einer gemeinsamen Lichtleitfaser vereint und schließlich einem Spektrometer zugeleitet, das die M spektral schmalbandigen Lichtimpulse auf M Detektoren leitet. Jeder der M Detektoren detektiert die zugehörige Gruppe von Sensoren in einem Zeitmultiplexingverfahren. Damit kann das in der US 5,498,867 beschriebene Verfahren als gemischtes Zeit- und Wellenlängen-Multiplexingverfahren bezeichnet werden. Durch die unterschiedlichen Wellenlängen müssen die Sensoren für diese Wellenlängen angepasst werden. Bei einem Positionsmesssystem mit einer einzigen, durch alle Abtasteinheiten abgetasteten plattenförmigen Maßverkörperung ist jedoch eine solche Anpassung nicht möglich, da die Gitterstruktur (insbesondere die Phasenhöhe) der Maßverkörperung nur für eine einzige Wellenlänge optimiert werden kann.

Die US 4,546,466 offenbart ein absolutes optisches Positionsmesssystem, bei dem mehrere Code-Spuren einer Maßverkörperung, mittels eines gemischten Zeit- und Wellenlängenmuftiplexingverfahrens abgetastet werden. Eine Nutzung dieses Verfahrens zur Abtastung einer einzigen plattenförmigen Maßverkörperung ist aufgrund der Mehrzahl genutzter Wellenlängen wie in der vorhergehend diskutierten Druckschrift nicht möglich,

## ZUSAMMENFASSUNG DER ERFINDUNG

Der vorliegende Erfindung liegt die Aufgabe zugrunde, ein Positionsmesssystem sowie ein Verfahren zum Betrieb eines Positionsmesssystems anzugeben, das mehrere Abtasteinheiten zur optischen Abtastung von ein oder mehreren Maßverkörperungen umfasst, wobei die Abtasteinheiten mit mehreren Lichtquellen uns mehreren Detektoren optisch gekoppelt sind. Die Zahl der erforderlichen Beleuchtungs- und/oder Detektionskanäle für die Lichtzuführung und Lichtabführung soll hierbei möglichst minimiert werden.

Diese Aufgabe wird erfindungsgemäß durch ein Positionsmesssystem mit den Merkmalen des Anspruchs 1 gelöst.

Ferner wird diese Aufgabe erfindungsgemäß durch ein Verfahren zum Betrieb eines Positionsmesssystem mit den Merkmalen des Anspruchs 12 gelöst.

Vorteilhafte Ausführungen des erfindungsgemäßen Positionsmesssystems sowie des erfindungsgemäßen Verfahrens zum Betrieb eines Positionsmesssystems ergeben sich aus den Maßnahmen, die in den abhängigen Ansprüchen aufgeführt sind.

Das erfindungsgemäße Positionsmesssystem umfasst mehrere Abtasteinheiten zur optischen Abtastung mindestens einer Maßverkörperung, wobei die Abtasteinheiten mit mehreren Lichtquellen und mehreren Detektoren optisch gekoppelt sind. Zwischen den Abtasteinheiten und den Detektoren sind mehrere Demultiplexer angeordnet, über die jeweils mindestens zwei Abtasteinheiten mit einem Detektor gekoppelt sind. Dabei sind die Lichtquellen derart ausgebildet, dass diese zeitlich nacheinander gepulst betreibbar sind, wobei die Lichtquellen über mehrere Multiplexer mit allen Abtasteinheiten gekoppelt sind, die jeweils einen eingangsseitigen primären Beleuchtungskanal einer Lichtquelle auf mehrere ausgangsseitige sekundäre Beleuchtungskanäle aufspalten und den verschiedenen Abtasteinheiten zuführen. Ferner sind die Abtasteinheiten derart ausgebildet, dass pro Abtasteinheit mehrere phasenverschobene optische Abtastsignale erzeugbar sind, die über mehrere primäre Detektionskanäle jeweils den Demultiplexern eingangsseitig zuführbar sind, die die zugeführten primären Detektionskanäle ausgangsseitig jeweils auf einen sekundären Detektionskanal zusammenfassen und einem Detektor zuführen.

Es ist möglich, dass zur optischen Kopplung zwischen den Lichtquellen und den Abtasteinheiten Singlemode-Lichtleitfasern angeordnet sind.

Ferner kann vorgesehen sein, dass zur optischen Kopplung zwischen den Abtasteinheiten und den Detektoren Multimode-Lichtleitfasern angeordnet sind.

Hierbei können zur optischen Kopplung

- Freistrahl-Strecken zwischen den Lichtquellen und den Abtasteinheiten ausgebildet sein

und/oder

- Freistrahl-Strecken zwischen den Abtasteinheiten und den Detektoren ausgebildet sein.

Desweiteren ist es möglich, dass die Lichtquellen jeweils Strahlung mit der gleichen Wellenlänge emittieren.

In einer weiteren Ausführungsform können die mehreren, zeitlich nacheinander gepulst betreibbaren Lichtquellen als Anordnung aus einer einzelnen, gepulst betreibbaren Lichtquelle, einem Aufspaltelement und mehreren Verzögerungsstrecken ausgebildet sein.

Es kann desweiteren vorgesehen sein, dass der Multiplexer als Aufspaltgitter ausgebildet ist, der auf einer Abtastplatte im Abtaststrahlengang angeordnet ist.

Hierbei kann der Multiplexer einen Strahlteilerspiegel umfassen.

Ferner kann der der Demultiplexer mehrere Gitter umfassen.

Es ist desweiteren möglich, dass der Multiplexer und die Demultiplexer in die Abtastoptik der Abtasteinheit integriert ausgebildet sind.

Dabei können einige Abtastgitter der Abtastoptik als Multiplexer wirken und andere Abtastgitter der Abtastoptik als Demultiplexer wirken.

Im Rahmen des erfindungsgemäßen Verfahrens zum Betrieb eines Positionsmesssystems mit mehreren Abtasteinheiten zur optischen Abtastung mindestens einer Maßverkörperung, sind die Abtasteinheiten mit mehreren Lichtquellen und mehreren Detektoren optisch gekoppelt. Über mehrere Demultiplexer, die zwischen den Abtasteinheiten und den Detektoren angeordnet sind, werden die phasenverschobenen Abtastsignale mindestens zweier Abtasteinheiten einem Detektor zugeführt. Dabei werden

- die Lichtquellen zeitlich nacheinander gepulst betrieben, wobei die Lichtquellen über mehrere Multiplexer mit allen Abtasteinheiten gekoppelt sind, über die jeweils ein eingangsseitiger primärer Beleuchtungskanal einer Lichtquelle auf mehrere ausgangsseitige sekundäre Beleuchtungskanäle aufgespalten und den verschiedenen Abtasteinheiten zugeführt wird und
- die pro Abtasteinheit erzeugten mehreren optischen Abtastsignale werden über mehrere primäre Detektionskanäle jeweils den Demultiplexern eingangsseitig zugeführt, über die die zugeführten primären Detektionskanäle ausgangsseitig jeweils auf einen sekundären Detektionskanal zusammengefasst und einem Detektor zugeführt werden.

Als besonders vorteilhaft erweist sich bei der erfindungsgemäßen Positionsmesseinrichtung, dass die Zahl der erforderlichen Beleuchtungs- und/oder Detektionskanäle für die Lichtzuführung und Lichtabführung und damit z.B. die Zahl erforderlicher Lichtleitfasern, minimiert werden kann.

Die geringe Zahl von Beleuchtungs- und/oder Detektionskanälen für die Lichtzuführung und Lichtabführung ist dabei nicht nur in Positionsmesssystemen mit redundanten Abtasteinheiten vorteilhaft, sondern auch bei Positionsmesssystemen einsetzbar, die zur getrennten Erfassung mehrerer räumlicher Freiheitsgrade mehrere Abtasteinheiten umfassen. Umfassen die Beleuchtungs- und/oder Detektionskanäle für die Lichtzuführung und Lichtabführung Lichtleitfasern, so erweist sich deren erfindungsgemäß geringe Zahl auch hier vorteilhaft, wenn die Abtasteinheiten auf bewegten Tischen montiert sind, die sehr genau positioniert werden müssen, da die Lichtleitfasern stets Störkräfte auf diese Tische übertragen.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

## KURZE BESCHREIBUNG DER ZEICHNUNGEN

Es zeigt

Figur 1          eine stark schematisierte Darstellung eines erfindungsgemäßen Positionsmesssystems;

Figur 2          eine Darstellung zum Zusammenhang zwischen der Zahl der Abtaststellen und der optimalen Zahl von Lichtquellen im erfindungsgemäßen Positionsmesssystem;

Figur 3a, 3b     jeweils eine schematisierte Teilansicht des Abtaststrahlengangs in einem ersten Ausführungsbeispiel des erfindungsgemäßen Positionsmesssystems;

Figur 4a - 4e    jeweils eine schematisierte Teildarstellung eines zweiten Ausführungsbeispiels des erfindungsgemäßen Positionsmesssystems;

Figur 5a, 5b     jeweils eine unterschiedliche schematisierte Darstellung eines dritten Ausführungsbeispiels des erfindungsgemäßen Positionsmesssystems;

Figur 6a - 6c    jeweils eine Ansicht von verwendeten Gittern im dritten Ausführungsbeispiel des erfindungsgemäßen Positionsmesssystems.

## BESCHREIBUNG DER AUSFÜHRUNGSFORMEN

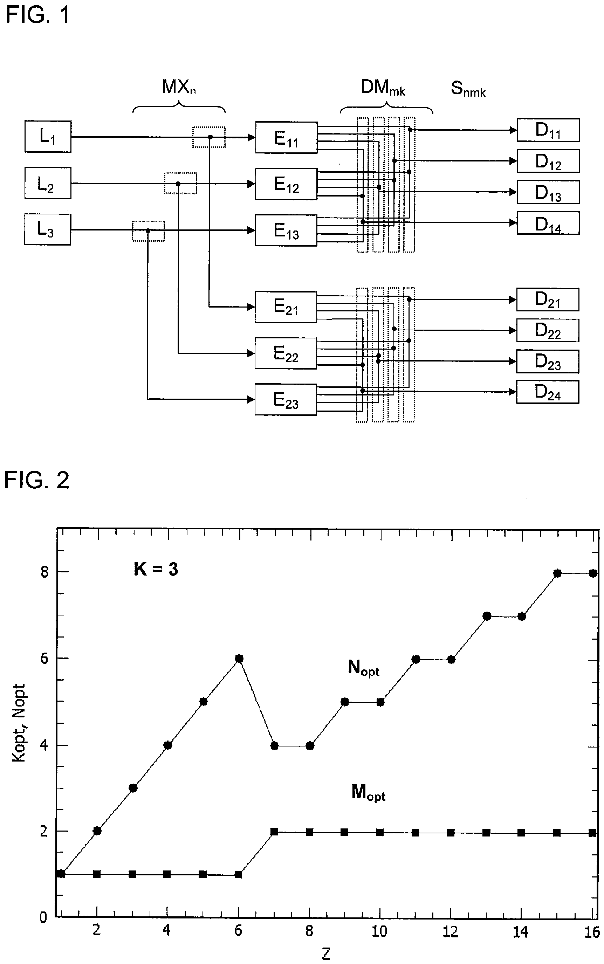

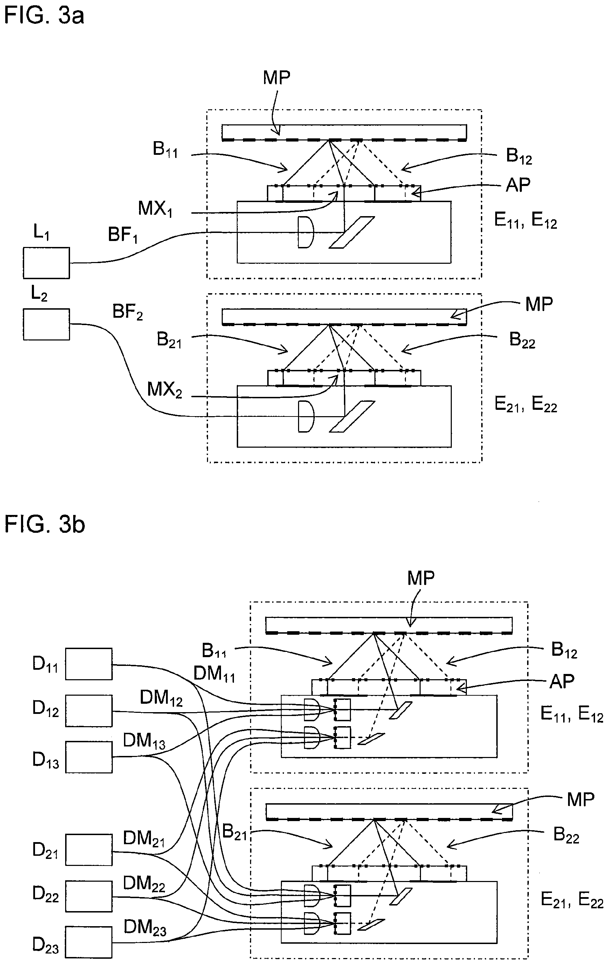

Bevor anhand der Figuren 3a - 6c drei Ausführungsbeispiele des erfindungsgemäßen Positionsmesssystems im Detail beschrieben werden, seien nachfolgend anhand der Figuren 1 und 2 diverse grundsätzliche Überlegungen im Zusammenhang mit der vorliegenden Erfindung erläutert.

Das in Figur 1 dargestellte erfindungsgemäße Positionsmesssystem umfasst N Lichtquellen $L_n$ (n = 1, 2,...N; hier N = 3), die zeitlich nacheinander gepulst betrieben werden. In dargestellten Beispiel sind die verschiedenen Beleuchtungs- und Detektionskanäle dabei mit Hilfe von Lichtleitfasern ausgebildet; wie nachfolgend noch erläutert wird, ist dies nicht zwingend erforderlich. Die verschiedenen Lichtquellen $L_n$ emittieren jeweils Strahlung mit der identischen oder der nahezu identischen Wellenlänge $\lambda$. Als nahezu identische Wellenlänge $\lambda$ wird dabei ein Wellenlängenbereich $\lambda + \Delta\lambda$ mit einer Wellenlängentoleranz $\Delta\lambda < \lambda/20$ bezeichnet. Die N, mit den Lichtquellen $L_n$ gekoppelten, ausgehenden Lichtleitfasern, die nachfolgend als primäre Beleuchtungsfasern bzw. primäre Beleuchtungskanäle bezeichnet seien, werden jeweils einem Multiplexer $MX_n$ (n = 1, 2,...N) zugeführt, der eine primäre Beleuchtungsfaser am Eingang in M Lichtleitfasern (hier M = 2) am Ausgang aufspaltet (1xM-Multiplexer). Die N · M Lichtfasern (hier N · M = 6) am Ausgang der Multiplexer $MX_n$ seien im Folgenden als sekundäre Beleuchtungsfasern bzw. sekundäre Beleuchtungskanäle bezeichnet. Die sekundären Beleuchtungsfasern sind jeweils mit einer Abtasteinheit $E_{nm}$ verbunden, so dass N · M Abtasteinheiten $E_{nm}$ (n = 1, 2,...N; m = 1, 2,...M) mit Licht versorgt werden können. Jede der N · M Abtasteinheiten $E_{nm}$ liefert K phasenverschobene, optische Abtastsignale $S_{nmk}$ (k = 1, 2,...K; hier K = 4), die in K Lichtleitfasern abgeleitet werden. Die insgesamt N · M · K Lichtleitfasern (hier N · M · K = 24) seien im Folgenden als primäre Detektionsfasern bzw. primäre Detektionskanäle bezeichnet. Die K primären Detektionsfasern der N · M Abtasteinheiten $E_{nm}$ werden in K · M Gruppen zu je N primären Detektionsfasern eingeteilt. Dies erfolgt derart, dass in jeder Gruppe nur Abtasteinheiten $E_{nm}$ zugeordnet sind, die von unterschiedlichen Lichtquellen $L_n$ versorgt werden. Jede solche Gruppe primärer Detektionsfasern wird mit einem Demultiplexer $DM_{mk}$ (m = 1, 2,...M; k = 1, 2,...K) verbunden, der alle eingehenden primären Detektionsfasern auf eine ausgehende, sog. sekundäre Detektionsfaser bzw. sekundären Detektionskanal zusammenfasst (N x 1 Demultiplexer). Damit gibt es K · M sekundäre Detektionsfasern (hier K · M = 8), die jeweils an einem Detektor $D_{mk}$ (m = 1, 2,...M; k = 1, 2,...K) angeschlossen sind, um die entsprechenden Lichtimpulse in elektrische Stromimpulse zur Weiterverarbeitung umzuwandeln.

Über den hier vorgesehenen Multiplexer eine wird eine primäre Beleuchtungsfaser bzw. ein primärer Beleuchtungskanal in mehrere sekundäre Beleuchtungsfasern bzw. sekundäre Beleuchtungskanäle aufgespalten. Entsprechend vereint ein Demultiplexer mehrere primäre Detektionsfasern bzw. mehrere Detektionskanäle auf eine sekundäre Beleuchtungsfaser bzw. einen sekundären Beleuchtungskanal. Die Funktionen von Multiplexer und Demultiplexer sind damit komplementär zueinander, so dass gleiche Bauteile hierfür verwendet werden können. Die verwendeten Multiplexer sollten ein möglichst gleiches Übertragungsverhalten bei der Aufspaltung auf die mehreren sekundären Beleuchtungsfasern bzw. sekundäre Beleuchtungskanäle aufweisen, so dass insbesondere die Intensitäten der Lichtimpulse in den sekundären Beleuchtungsfasern bzw. sekundären Beleuchtungskanälen weitgehend (innerhalb $\pm 20$ %) identisch sind. Analog hierzu sollte auch das Übertragungsverhalten der Demultiplexer weitgehend identisch sein, so dass gleich intensive Lichtimpulse in den mehreren primären Detektionsfasern bzw. primären Detektionskanälen in gleich intensive Lichtimpulse in der ausgehenden, sekundären Detektionsfaser bzw. in dem sekundären Detektionskanal entstehen. Darüber erweist sich als vorteilhaft, wenn die Verluste der Multiplexer bzw. Demultiplexer durch Absorption, Streuung oder Rückreflexion möglichst minimal sind. Multiplexer und Demultiplexer können beispielsweise in Form von optischen Wellenleitern auf einem Glassubstrat mit Y-Verzweigern realisiert werden; alternativ können auch optische Fasern durch Spleißen zu Y-Verzweigern verschmolzen werden. Im Hinblick auf hierzu geeignete Bauformen von Multiplexern und Demultiplexern sei an dieser Stelle beispielhaft auf die EP 1 989 577 A2 verwiesen.

Über die beschriebene Konfiguration ist im erfindungsgemäßen Positionsmesssystem die Abtasteinheit $E_{nm}$ mit der Lichtquelle $L_n$ und den Detektoren $D_{mk}$ verbunden. Wenn die Lichtquelle $L_n$ gepulst wird, so werden alle M verbundene Abtasteinheiten $E_{nm}$, m = 1, 2,...M gleichzeitig mit einem Lichtimpuls versorgt und geben optisch modulierte Abtastsignale $S_{nmk}$ (m = 1, 2,...M; k = 1, 2,...K) ab, die getrennt mit den Detektoren $D_{mk}$ (m = 1, 2,...M; k = 1, 2,...K) detektiert werden. Beim nachfolgenden Puls der nächsten Lichtquelle $L_{n+1}$ werden die Abtasteinheiten $E_{n+1m}$, m = 1, 2,...M Abtasteinheiten mit Licht versorgt und liefern die optisch modulierten Abtastsignale $S_{n+1mk}$ (m = 1, 2,...M; k = 1, 2,...K), die durch dieselben Detektoren $D_{mk}$ (m = 1, 2,... M; k = 1, 2,... K) detektiert werden.

Das anhand von Figur 1 erläuterte Grundprinzip eines erfindungsgemäßen Positionsmesssystems benötigt lediglich N Lichtquellen und M · K Detektoren, um N · M Abtasteinheiten mit je K Faserausgängen zu betreiben. Das zugrunde liegende erfindungsgemäße Multiplexingverfahren kann als kombiniertes Zeit-/Detektionsmultiplexing-Verfahren bezeichnet werden. Mit den N Lichtquellen $L_n$ und den M Gruppen zu je K Detektoren $D_{mk}$ (k = 1, 2,...K) können N · M Abtasteinheiten betrieben werden, was sich somit vom bekannten reinen Zeitmultiplexing-Verfahren aus der eingangs erwähnten DE 35 26 049 A1 unterscheidet, bei dem N · M Lichtquellen und K Detektoren nötig sind, um N · M Abtasteinheiten zu betreiben.

Auch der Fall ohne jegliches Multiplexing, d.h. jede Abtasteinheit hat eine eigene Lichtquelle und eigene Detektoren, kann mit dem erfindungsgemäßen Vorgehen verglichen werden. Ein entsprechender Vergleich ist in der folgenden Tabelle zusammengefasst:

| Multiplexing-Verfahren | Zahl der Lichtquellen | Zahl der Detektoren | Zahl der Abtasteinheiten |
|---|---|---|---|
| ohne Multiplexing (Stand der Technik) | 1 | $N \cdot M \cdot K$ | $N \cdot M$ |
| Zeitmultiplexing (Stand der Technik) | $N \cdot M$ | $K$ | $N \cdot M$ |
| kombiniertes Zeit-/Detektionsmulitplexing | $N$ | $M \cdot K$ | $N \cdot M$ |

Das Verfahren ohne Multiplexing stellt damit den Grenzfall eines kombinierten Zeit-/Detektionsmultiplexing-Verfahrens für $N = 1$ dar; analog stellt das Zeitmultiplexing-Verfahren den Grenzfall für $M = 1$ dar.

Bei einer vorgegebenen Zahl $Z = N \cdot M$ von Abtasteinheiten benötigt das erfindungsgemäße kombinierte Zeit-/Detektionsmultiplexing-Verfahren N Lichtleitfasern für die Lichtzuführung (primäre Beleuchtungsfasern bzw. primäre Beleuchtungskanäle) und $M \cdot K$ Lichtleitfasern für die Lichtabführung (sekundäre Detektionsfasern bzw. sekundäre Detektionskanäle), d.h. insgesamt $N + M \cdot K$ Lichtleitfasern. Pro Abtasteinheit werden damit p Lichtleitfasern benötigt, mit

$$p = \frac{N + M \cdot K}{Z} = \frac{1}{M} + \frac{M \cdot K}{Z} \quad \text{(Gl. 1)}$$

Bei vorgegebener Zahl $Z$ von Abtasteinheiten und vorgegebener Zahl $K$ von Detektionsfasern pro Abtaststelle kann p minimiert und daraus eine optimale Kennzahl $M_{opt} \geq 1$ des Multiplexers $MX_n$ bestimmt werden:

$$M_{opt} = Max\left(Round\left(\sqrt{\frac{Z}{K}}\right), 1\right) \quad \text{(Gl. 2)}$$

Hierbei bedeutet Round() die Rundung des Arguments auf die nächste ganze Zahl, Max() den maximalen Wert unter den Argumenten.

Daraus ergibt sich auch die optimale Zahl $N_{opt}$ von Lichtquellen:

$$N_{opt} = Ceil\left(\frac{Z}{M_{opt}}\right) \quad \text{(Gl. 3)}$$

Hierbei stellt Ceil() eine Funktion zum Aufrunden des Arguments auf die nächstgrößere ganze Zahl dar.

In Figur 2 ist der Verlauf von $M_{opt}$ und $N_{opt}$ als Funktion von Z für ein vorgegebenes $K = 3$ gezeigt. Für ein typisches Beispiel mit $Z = 8$ und $K = 3$ ergibt sich $M_{opt} = 2$ und $N_{opt} = 4$. Aus Figur 2 ist auch ersichtlich, dass ein Verfahren ohne Multiplexing (d.h. $N = 1$) außer im trivialen Fall $Z = 1$ nie optimal ist. Für $Z \leq 6$ lautet die optimale Lösung nach Figur 2 $M_{opt} = 1$ und $N_{opt} = Z$. Dies entspricht dem Zeitmultiplexing-Verfahren. Für $Z > 6$ ist das erfindungsgemäße kombinierte Zeit-/Detektionsmultiplexing-Verfahren günstiger.

Desweiteren ist hierbei zu beachten, dass im Fall von vorgesehenen Lichtleitfasern zur optischen Kopplung der Aufwand für zusätzliche Lichtquellen und auch zusätzliche Beleuchtungsfasern, die meist als teure Singlemode-Fasern ausgeführt werden müssen, deutlich höher ist, als derjenige für zusätzliche Detektoren und Detektionsfasern, die meist als einfache Multimode-Fasern ausgebildet sein können. Deshalb ist es abweichend von Gleichung 2 und 3 meist günstiger, die Zahl N der Lichtquellen zu reduzieren und dafür die Zahl $M \cdot K$ der Detektoren zu vergrößern. Das bedeutet, dass das erfindungsgemäße kombinierte Zeit-/Detektionsmultiplexing-Verfahren auch schon für $Z \leq 6$ vorteilhaft ist.

Die Lichtführung bzw. optische Kopplung in den verschiedenen Beleuchtungs- und Detektionskanälen muss im erfindungsgemäßen Positionsmesssystem nicht ausschließlich mittels Lichtleitfasern erfolgen. So können zur optischen Kopplung zwischen den Lichtquellen und den Abtasteinheiten und/oder zwischen den Abtasteinheiten und den Detektoren auch Freistrahlstrecken ohne Lichtleitfasern ausgebildet werden. Beispielsweise können die Multiplexer $MX_n$ und/oder die Demultiplexer $DM_{mk}$ als Freistrahloptiken mit geeigneten Strahlteilern und/oder Gittern ausgeführt sein. Auch die primären und/oder sekundären Beleuchtungskanäle können teilweise oder vollständig durch Freistrahloptiken ersetzt werden. In diesem Fall seien die entsprechenden Lichtbündel als primäre bzw. sekundäre Beleuchtungsstrahlenbündel bezeichnet. Ähnliches gilt für die primären und sekundären Detektionskanäle, die ebenfalls teilweise oder vollständig als Freistrahloptiken ausgebildet werden können. Die entsprechenden Strahlenbündel seien in diesem Fall dann als primäre bzw. sekundäre Detektionsstrahlenbündel bezeichnet.

Ein erstes konkretes Ausführungsbeispiel des erfindungsgemäßen Positionsmesssystems wird nachfolgend anhand der Figuren 3a und 3b erläutert. Figur 3a zeigt hierbei den Abtaststrahlengang von den zwei vorgesehenen Lichtquellen $L_1$, $L_2$ bis zu den vier Abtasteinheiten $E_{11}$, $E_{12}$, $E_{21}$, $E_{22}$; in Figur 3b ist der Abtaststrahlengang von den vier Abtasteinheiten $E_{11}$, $E_{12}$, $E_{21}$, $E_{22}$. bis zu den sechs Detektoren $D_{11}$, $D_{12}$, $D_{13}$, $D_{21}$, $D_{22}$, $D_{23}$ dargestellt.

In den Figuren 3a und 3b sind die Abtasteinheiten $E_{11}$, $E_{12}$, $E_{21}$, $E_{22}$ und die plattenförmigen Maßverkörperungen MP lediglich aus Gründen der besseren Darstellbarkeit übereinander angeordnet gezeigt. Die Abtasteinheiten $E_{11}$, $E_{12}$, $E_{21}$, $E_{22}$. tasten normalerweise dieselben plattenförmigen Maßverkörperungen MP ab, die in einer gemeinsamen Messebene angeordnet sind.

In der dargestellten Ausführungsform des erfindungsgemäßen Positionsmesssystems sind zwei Lichtquellen $L_1$ und $L_2$ (N = 2) vorgesehen, die über zwei primäre Beleuchtungsfasern $BF_1$ und $BF_2$, die als Singlemode-Lichtleitfasern ausgebildet sind, mit den Abtasteinheiten $E_{11}$ und $E_{22}$ bzw. $E_{21}$ und $E_{22}$ optisch gekoppelt sind. Die jeweils austretenden, primären Beleuchtungsstrahlenbündel werden kollimiert und über einen Umlenkspiegel jeweils einem Multiplexer $MX_1$ bzw. $MX_2$ in Form eines Aufspaltgitters zugeführt. Die Multiplexer $MX_1$ bzw. $MX_2$ spalten die darauf einfallenden primären Beleuchtungsstrahlenbündel jeweils in zwei sekundäre Beleuchtungsstrahlenbündel (M = 2) auf. Der weitere Strahlenverlauf ist in den Figuren 3a und 3b nur stark schematisiert dargestellt; hinsichtlich eines möglichen Abtaststrahlengangs sei auf die EP 1 762 828 A2 der Anmelderin verwiesen. Der Strahlenverlauf $B_{11}$ bzw. $B_{21}$ der Abtasteinheiten $E_{11}$ bzw. $E_{21}$ ist in den Figuren 3a und 3b jeweils mit Hilfe durchgezogener Linien angedeutet, der Strahlenverlauf $B_{12}$ bzw. $B_{22}$ der Abtasteinheiten $E_{12}$ und $E_{22}$ mit gestrichelten Linien.

Die Strahlenverläufe $B_{11}$, $B_{12}$, $B_{21}$, $B_{22}$ aller vier Abtasteinheiten $E_{11}$, $E_{12}$, $E_{21}$, $E_{22}$ beinhalten jeweils Teilbereiche mit einer Strahlneigung senkrecht zur Zeichenebene der Figuren 3a, 3b. Dadurch entsteht ein Strahlenversatz senkrecht zur Zeichenebene der Figuren 3a und 3b, so dass die zur Abtastung dienenden Optikelemente in Figur 3a relativ zu denen in Figur 3b senkrecht zur Zeichenebene versetzt angeordnet sind.

Jede der vier Abtasteinheiten $E_{11}$, $E_{12}$, $E_{21}$, $E_{22}$ liefert im vorliegenden Ausführungsbeispiel drei optische Abtastsignale (K = 3), die in primäre Detektionsfasern, ausgebildet als Multimode-Lichtleitfasern, eingekoppelt werden. Die primären Detektionsfasern der Abtasteinheiten $E_{11}$ und $E_{21}$ werden paarweise den Demultiplexern $DM_{11}$, $DM_{12}$ und $DM_{13}$ zugeführt, die die modulierten Abtastsignale beider Abtasteinheiten $E_{11}$ und $E_{21}$ ausgangsseitig jeweils auf drei sekundäre Detektionsfasern zusammenführen. Hierbei sind die Demultiplexer $DM_{11}$, $DM_{12}$ und $DM_{13}$ in diesem Ausführungsbeispiel in Spleißtechnik als Y-Faserverzweiger ausgebildet. Die sekundären Detektionsfasern leiten die optischen Abtastsignale dann jeweils auf die entsprechenden Detektoren $D_{11}$, $D_{12}$ bzw. $D_{13}$ weiter. Analog hierzu werden auch die primären Detektionsfasern der Abtasteinheiten $E_{12}$ und $E_{22}$ paarweise den Demultiplexern $DM_{21}$, $DM_{22}$ und $DM_{23}$ zugeführt. Die entsprechenden drei sekundären Detektionsfasern leiten die Abtastsignale von den Demultiplexern $DM_{21}$, $DM_{22}$ und $DM_{23}$ auf die zugeordneten Detektoren $D_{21}$, $D_{22}$ bzw. $D_{23}$. Mittels nicht in den Figuren dargestellten polarisationsoptischen Bauelementen wird eine Phasenverschiebung der drei von jeder Abtasteinheit $E_{11}$, $E_{12}$, $E_{21}$, $E_{22}$ erzeugten Abtastsignale von zueinander 120° bewirkt.

In dieser Ausführungsform des erfindungsgemäßen Positionsmesssystems werden für vier Abtasteinheiten $E_{11}$, $E_{12}$, $E_{21}$, $E_{22}$ zwei Lichtquellen $L_1$, $L_2$ sowie sechs Detektoren $D_{11}$, $D_{12}$, $D_{13}$, $D_{21}$, $D_{22}$, $D_{23}$ verwendet. Insgesamt werden zwei primäre Beleuchtungsfasern $BF_1$, $BF_2$ und sechs sekundäre Detektionsfasern eingesetzt. Damit müssen nur insgesamt acht Lichtleitfasern zwischen den Abtasteinheiten und einer Lichtquellen-/Detektoreinheit verlegt werden. Ohne die erfindungsgemäße Verwendung der mehreren Demultiplexer müssten stattdessen vierzehn Lichtleitfasern vorgesehen werden. Das bedeutet, dass in dieser Ausführungsform des erfindungsgemäßen Positionsmesssystems die Zahl der erforderlichen Lichtleitfasern auf 57% gegenüber dem Stand der Technik reduzierbar ist.

Im vorliegenden ersten Ausführungsbeispiel ist der Multiplexer bereits als Aufspaltgitter in der Abtasteinheit integriert ausgebildet. Die darüberhinaus noch zusätzlich erfindungsgemäß benötigten Demultiplexer können ausschließlich in die Lichtleitfaserstrecke integriert ausgebildet werden. Eine weitere Anpassung der Abtasteinheiten ist damit hier nicht erforderlich. Grundsätzlich können beliebige bekannte Abtasteinheiten ohne weitere Designänderungen verwendet werden, da die erfindungsgemäß zusätzlich erforderlichen Multiplexer und Demultiplexer ausschließlich in die Lichtleitfaserstrecken integriert ausgebildet werden können. Die vorgesehenen Abtasteinheiten können beliebig derart zur Maßverkörperung angeordnet werden, dass darüber eine genaue Positionsbestimmung und/oder eine genaue Selbstkalibrierung möglich ist.

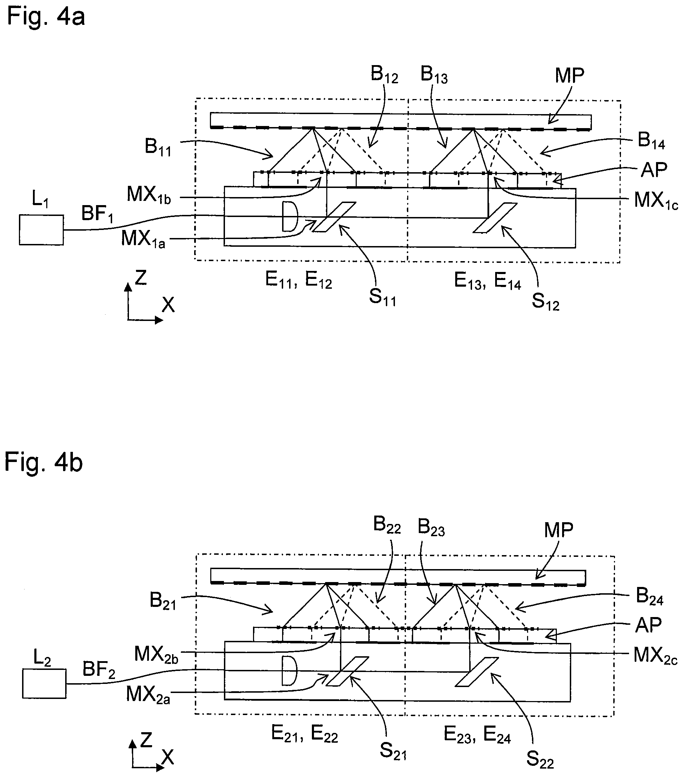

Ein zweites Ausführungsbeispiel des erfindungsgemäßen Positionsmesssystems wird nachfolgend anhand der Figuren 4a - 4e erläutert. Vorgesehen sind hier nunmehr zwei Lichtquellen $L_1$, $L_2$ (N = 2), die über die zwei primären Beleuchtungsfasern $BF_1$, $BF_2$ mit jeweils vier Abtasteinheiten $E_{11}$, $E_{12}$, $E_{13}$, $E_{14}$ bzw. $E_{21}$, $E_{22}$, $E_{23}$, $E_{24}$ verbunden sind, so dass das erfindungsgemäße Positionsmesssystem in dieser Ausführungsform insgesamt acht Abtasteinheiten $E_{11}$, $E_{12}$, $E_{13}$, $E_{14}$, $E_{21}$, $E_{22}$, $E_{23}$, $E_{24}$ (Z = 8) umfasst, die zur Positionsbestimmung und/oder Selbstkalibrierung nutzbar sind.

Das aus der Beleuchtungsfaser $BF_1$ austretende Strahlenbündel der Lichtquelle $L_1$ wird wie in Figur 4a gezeigt über eine Kollimatoroptik kollimiert und durch einen Strahlteilerspiegel $S_{11}$ aufgespalten. Der Strahlteilerspiegel $S_{11}$ fungiert in diesem Ausführungsbeispiel als erster Multiplexer $MX_{1a}$. Das am Strahlteilerspiegel $S_{11}$ reflektierte Teilstrah-

lenbündel trifft dann auf einen zweiten Multiplexer $MX_{1b}$, der hier als Aufspaltgitter ausgebildet ist, ähnlich wie im vorher erläuterten ersten Ausführungsbeispiel. Das am Strahlteilerspiegel $S_{11}$ transmittierte Teilstrahlenbündel gelangt über den Spiegel $S_{12}$ auf einen dritten Multiplexer $MX_{1c}$, ebenfalls ausgebildet als Aufspaltgitter. Alle drei Multiplexer $MX_{1a}$, $MX_{1b}$, $MX_{1c}$ wirken dabei zusammen wie ein Multiplexer mit vierfacher Aufspaltung (M = 4).

Analog hierzu wird wie in Figur 4b veranschaulicht das von der zweiten Lichtquelle $L_2$ emittierte Strahlenbündel nach dem Durchlaufen der primären Beleuchtungsfaser $BF_2$ über die Multiplexer $MX_{2a}$, $MX_{2b}$ und $MX_{2c}$ ebenfalls vierfach aufgespalten.

Die Strahlenverläufe $B_{11}$, $B_{13}$, $B_{21}$, $B_{23}$ sind wie im ersten Ausführungsbeispiel wieder mit durchgezogenen Linien dargestellt, die Strahlenverläufe $B_{12}$, $B_{14}$, $B_{22}$, $B_{24}$ mit gestrichelten Linien. Zur detaillierten Beschreibung einer geeigneten Abtastoptik sei wiederum auf die EP 1 762 828 A2 der Anmelderin verwiesen.

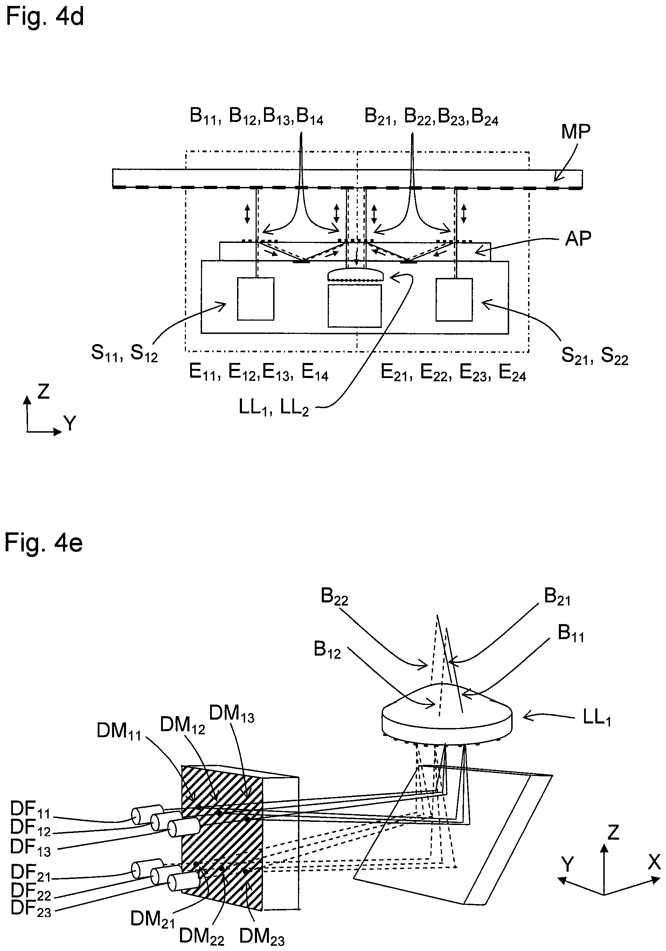

Der jeweilige Strahlenverlauf gemäß Fig. 4a und gemäß Fig. 4b ist in Y-Richtung nebeneinander angeordnet; Figur 4d zeigt eine Queransicht dieses Ausführungsbeispiels.

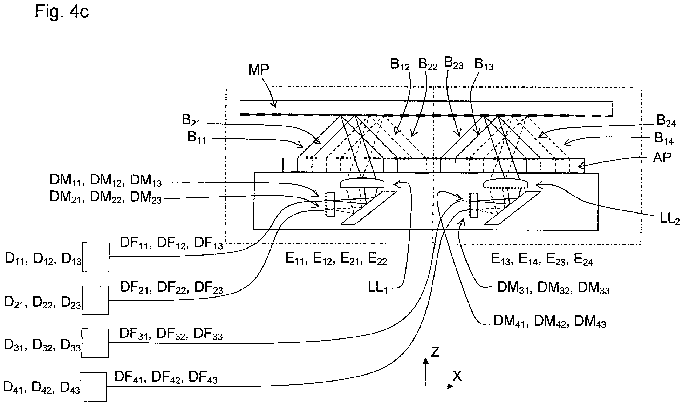

Die Teilstrahlenbündel werden nach der Aufspaltung durch die verschiedenen Multiplexer in Richtung der plattenförmigen Maßverkörperung MP gelenkt, wo sie nach einer Beugung in Messrichtung X durch Abtastgitter auf der Oberseite einer Abtastplatte AP in Y-Richtung abgelenkt werden. Die Abtastgitter sind als diffraktive Beugungsgitter ausgebildet, die mehrere optische Funktionen vereinen. Wie in der EP 1 762 828 A2 der Anmelderin beschrieben, fokussieren sie die darauf einfallenden Teilstrahlenbündel in Y-Richtung auf Spiegel an der Unterseite der Abtastplatte AP. Weitere Abtastgitter auf der Oberseite der Abtastplatte AP kollimieren die von den Spiegeln reflektierten Teilstrahlenbündel wieder und lenken sie erneut zur Maßverkörperung MP. Wie insbesondere aus Figur 4d ersichtlich, entsteht dadurch ein Strahlversatz der Teilstrahlenbündel in Y-Richtung zwischen dem ersten und zweiten Auftreffen auf der Maßverkörperung MP. Die Teilstrahlenbündel, die von den Lichtquellen $L_1$, $L_2$ stammen, werden gemäß Figur 4d über die Spiegel $S_{11}$, $S_{12}$ bzw. $S_{11}$, $S_{12}$ erstmalig zur Maßverkörperung MP gelenkt und dann zur Mitte hin in Y-Richtung versetzt, so dass alle Teilstrahlenbündel der Abtasteinheiten $E_{11}$, $E_{12}$, $E_{21}$, $E_{22}$ bzw. der Abtasteinheiten $E_{13}$, $E_{14}$, $E_{23}$, $E_{24}$ nach der zweiten Beugung an der Maßverkörperung auf die Linse $LL_1$ bzw. $LL_2$ treffen. Der gesamte Strahlenverlauf nach den Reflexionen an den Spiegeln auf der Rückseite der Abtastplatte AP bis zu den Detektoren $D_{11}$ ... $D_{43}$ ist in Figur 4c gezeigt; der Strahlenverlauf von der Linse $LL_1$ bis zu den Detektionsfasern $DF_{11}$, $DF_{12}$, $DF_{13}$, $DF_{21}$, $DF_{22}$, $DF_{23}$ ist perspektivisch in Figur 4e ersichtlich. Der Strahlenverlauf von der Linse $LL_2$ bis zu den Detektionsfasern $DF_{31}$, $DF_{32}$, $DF_{33}$, $DF_{41}$, $DF_{42}$, $DF_{43}$ verläuft analog hierzu. Die Linse $LL_1$ fokussiert die einfallenden Teilstrahlenbündel über einen Umlenkspiegel auf die Gitter $DM_{11}$, $DM_{12}$, $DM_{13}$, $DM_{21}$, $DM_{22}$, $DM_{23}$ die auf einem gemeinsamen Substrat angeordnet sind. Auf der Unterseite der Linse $LL_1$ befindet sich zudem ein Aufspaltgitter, das jedes der vier einfallenden Teilstrahlenbündel in eine 0., +1. und -1. Beugungsordnung in Y-Richtung aufspaltet (K = 3), die durch nicht in den Figuren gezeigte polarisationsoptische Bauelemente zueinander phasenverschobene Abtastsignale liefern. Die 12 Teilstrahlenbündel treffen paarweise am selben Fokusort auf die Gitter $DM_{11}$, $DM_{12}$, $DM_{13}$, $DM_{21}$, $DM_{22}$, $DM_{23}$, da die auf die Linse $LL_1$ auftreffenden Teilstrahlenbündel paarweise parallel zueinander sind und deshalb auf denselben Fokusort geleitet werden. Die Gitter $DM_{11}$, $DM_{12}$, $DM_{13}$, $DM_{21}$, $DM_{22}$, $DM_{23}$ dienen dazu, die Paare von Teilstrahlenbündeln, die denselben Fokusort haben, durch Beugung in +1. bzw. -1. Beugungsordnung auch in dieselbe Richtung zu lenken. Dadurch können diese Paare von Teilstrahlenbündeln in dieselbe Detektionsfaser eingekoppelt werden. Die Gitter $DM_{11}$, $DM_{12}$, $DM_{13}$, $DM_{21}$, $DM_{22}$, $DM_{23}$ fungieren somit in diesem Ausführungsbeispiel als Demultiplexer. Meist ergeben sich für die Gitter $DM_{11}$, $DM_{12}$, $DM_{13}$, $DM_{21}$, $DM_{22}$, $DM_{23}$ gleichartige Gitterstrukturen, so dass sie wie in Figur 4e gezeigt, als flächiges Gitter ausgebildet werden können. In Figur 4e sind die Detektionsfasern $DF_{11}$, $DF_{12}$, $DF_{13}$, $DF_{21}$, $DF_{22}$, $DF_{23}$ aus Gründen der besseren Darstellbarkeit in Strahlrichtung -X etwas versetzt gezeichnet, befinden sich aber tatsächlich im engen Kontakt zu den Gittern $DM_{11}$, $DM_{12}$, $DM_{13}$, $DM_{21}$, $DM_{22}$, $DM_{23}$.

In diesem Ausführungsbeispiel des erfindungsgemäßen Positionsmesssystems werden durch eine einfache Anordnung gemäß Figur 4e jeweils zwölf Teilstrahlenbündel über nur wenige optische Bauelemente wie der Linse $LL_1$, dem Umlenkspiegel und dem gemeinsamen Multiplexer in Form eines Gitters in sechs sekundäre Detektionsfasern $DF_{11}$, $DF_{12}$, $DF_{13}$, $DF_{21}$, $DF_{22}$, $DF_{23}$ eingekoppelt. Eine aufwändige Strahljustage der einzelnen Teilstrahlenbündel ist damit nicht erforderlich, was den Aufwand und die Baugröße erheblich reduziert. Die Verwendung einer gemeinsamen Abtastplatte AP für alle acht Abtasteinheiten $E_{11}$, $E_{12}$, $E_{21}$, $E_{22}$, $E_{13}$, $E_{14}$, $E_{23}$, $E_{24}$ ergibt eine besonders kompakte Bauform und ein sehr driftstabiles Verhalten. Es stehen damit vier Positionsmesswerte für die Messrichtung X sowie vier Positionsmesswerte für die Messrichtung Z zur Verfügung.

Die Abtasteinheiten $E_{11}$, $E_{12}$, $E_{21}$, $E_{22}$ bzw. $E_{13}$, $E_{14}$, $E_{23}$, $E_2$ tasten die Maßverkörperung MP an unterschiedlichen Abtastorten ab. Für eine gute Selbstkalibrierung der Maßverkörperung MP ist die Anordnung dieser Abtastorte entscheidend. Deshalb sind in dieser Ausführungsform die Abtastorte der Abtasteinheiten $E_{11}$, $E_{12}$, $E_{13}$, $E_{14}$ in Y-Richtung beabstandet zu den Abtastorten der Abtasteinheiten $E_{21}$, $E_{22}$, $E_{23}$, $E_{24}$ vorgesehen. In Messrichtung X sind die Abtastorte der Abtasteinheiten $E_{11}$, $E_{12}$ bzw. $E_{21}$, $E_{22}$ bzw. $E_{13}$, $E_{13}$ bzw. $E_{23}$, $E_{24}$ jeweils paarweise verschoben und durch die X-Lage der Spiegel $S_{11}$, $S_{12}$, $S_{21}$, $S_{22}$.wählbar.

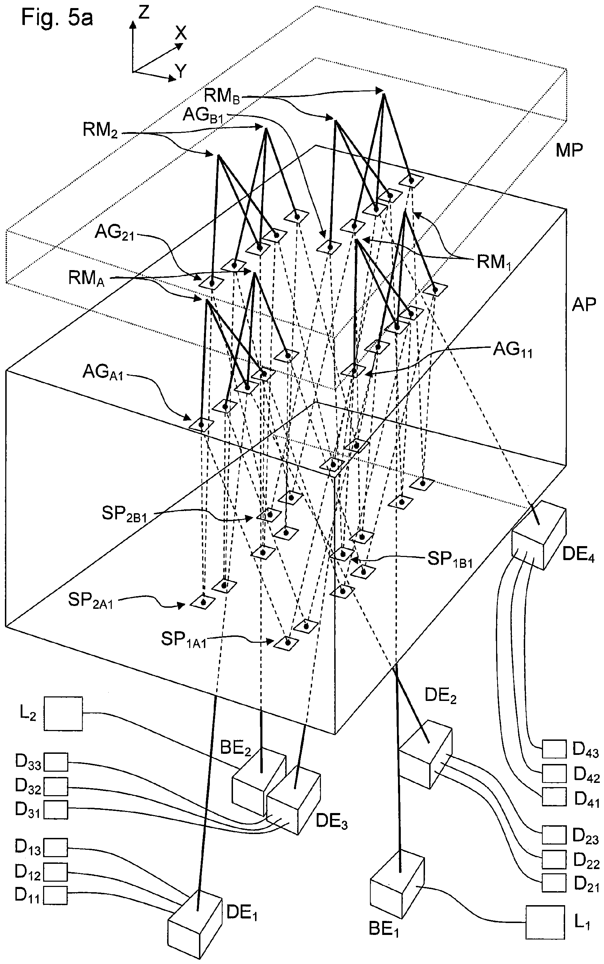

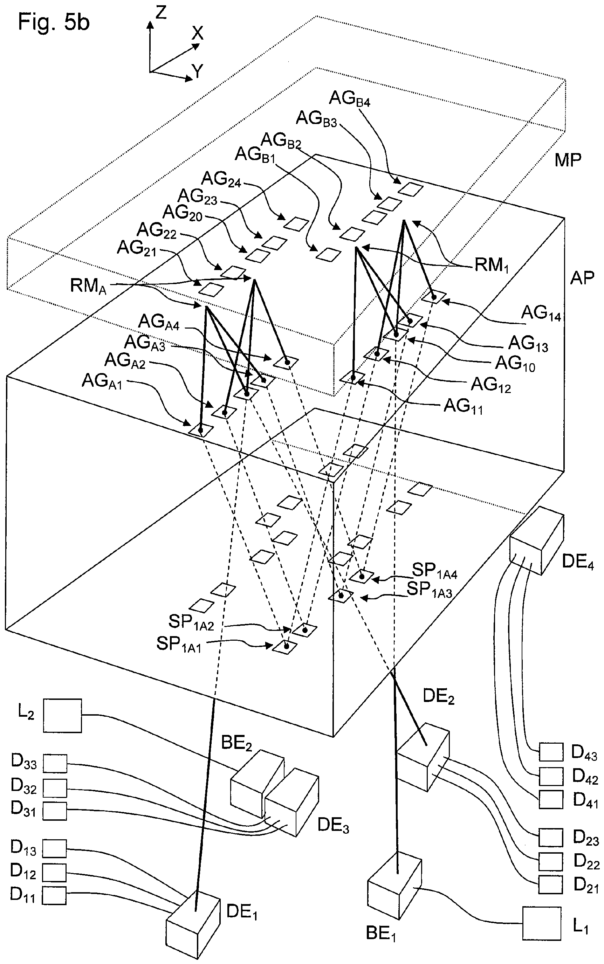

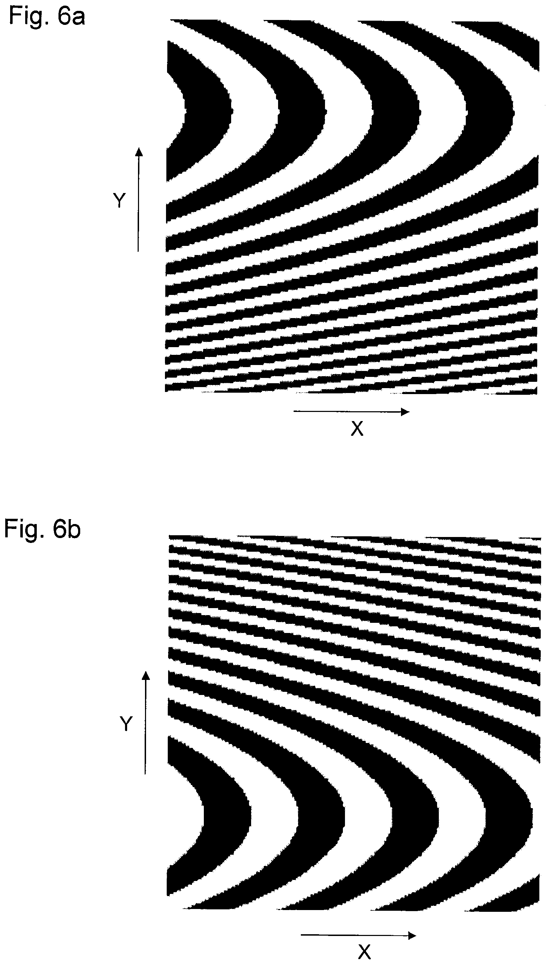

Ein drittes Ausführungsbeispiel des erfindungsgemäßen Positionsmesssystems wird abschließend anhand der Figuren 5a, 5b sowie 6a - 6c erläutert. Vorgesehen sind hierbei acht Abtasteinheiten (Z = 8) und zwei Lichtquellen $L_1$,

$L_2$ (N = 2). Während in den ersten beiden Ausführungsformen die Multiplexer bzw. die Demultiplexer vor der Aufspaltung der beiden interferierenden Teilstrahlenbündel bzw. nach deren Wiedervereinigung angeordnet sind, ist im vorliegenden dritten Ausführungsbeispiel vorgesehen, die Multiplexer und Demultiplexer in den Teil der Abtastoptik zu integrieren, in dem die beiden interferierenden Teilstrahlenbündel aufgespalten sind.

Der Strahlengang des dritten Ausführungsbeispiels soll nachfolgend exemplarisch anhand von Figur 5b erläutert werden, in der aus Gründen der besseren Übersichtlichkeit jedoch nur ein Teil des Strahlengangs der Figur 5a mit nur zwei Abtasteinheiten und einer Lichtquelle $L_1$ dargestellt ist.

Die fasergekoppelte Lichtquelle $L_1$ liefert Lichtimpulse an eine Beleuchtungseinheit $BE_1$, die eine Kollimatorlinse und ggf. einen Umlenkspiegel umfasst, und ein kollimiertes Strahlenbündel in Richtung der Maßverkörperung MP aussendet. Die Maßverkörperung MP trägt auf der Unterseite ein lineares Gitter oder ein zweidimensionales Kreuzgitter. Zwischen der Beleuchtungseinheit $BE_1$ und der Maßverkörperung MP befindet sich eine Abtastplatte AP mit einer Vielzahl an Abtastgittern $AG_{10}$ - $AG_{14}$, $AG_{A1}$ - $AG_{A4}$ auf der der Maßverkörperung zugewandten Oberseite und Spiegeln $SP_{1A1}$ - $SP_{1A4}$ auf der gegenüberliegenden Unterseite. Das von der Beleuchtungseinheit $BE_1$ her einfallende, kollimierte Strahlenbündel trifft auf ein Abtastgitter $AG_{10}$, das das einfallende Strahlenbündel in +1. und -1. Beugungsordnung in zwei Teilstrahlenbündel aufspaltet. Das Abtastgitter $AG_{10}$ dient hier als erster Multiplexer ($M_1 = 2$). Beide aufgespaltenen Teilstrahlenbündel propagieren dann zur Maßverkörperung MP, wo sie an dem sog. Abtastortpaar $RM_1$ in +1. und -1. Beugungsordnung in jeweils zwei weitere Teilstrahlenbündel gebeugt bzw. aufgespalten werden. Diese propagieren dann zu den Abtastgittern $AG_{11}$, $AG_{12}$, $AG_{13}$, $AG_{14}$, die mehrere optische Funktionen in einer einzigen Gitterstruktur vereinen. Zum einen werden die Teilstrahlenbündel in X- und Y-Richtung abgelenkt. Zum anderen werden sie quer zur Messrichtung X durch eine Zylinderlinsenfunktion auf die zugeordneten Spiegel $SP_{1A1}$ - $SP_{1A4}$ auf der Unterseite der Abtastplatte AP fokussiert. Nach der Reflexion an den Spiegeln $SP_{1A1}$ - $SP_{1A4}$ werden die Teilstrahlenbündel durch die Abtastgitter $AG_{A1}$ - $AG_{A4}$ auf der Oberseite der Abtastplatte AP quer zur Messrichtung X wieder kollimiert und in X- und Y-Richtung so abgelenkt, dass die einzelnen Teilstrahlenbündel jeweils antiparallel zu deren ursprünglicher Richtung nach der ersten Beugung an der Maßverkörperung MP sind. Sie treffen dann am Abtastortpaar $RM_A$ ein zweites Mal auf die Maßverkörperung MP, wo sie erneut in +1. bzw. -1. Beugungsordnung gebeugt werden und mit jeweils einem zweiten Teilstrahlenbündel überlagert, d.h. zur Interferenz gebracht werden. Durch zusätzliche optische Bauelemente, die in Fig. 5a und 5b der Übersichtlichkeit halber weggelassen sind, werden die beiden überlagerten Teilstrahlenbündel, die zu den beiden in Figur 5b dargestellten Abtasteinheiten gehören, jeweils zueinander senkrecht polarisiert. Sie propagieren zu den Detektoren $DE_1$ und $DE_2$, wo sie in bekannter Art und Weise mit Hilfe polarisationsoptischer Bauelemente in drei phasenverschobene, optische Abtastsignale gewandelt werden. Diese werden in drei Detektionsfasern (K = 3) eingekoppelt und den zugehörigen Detektoren $D_{11}$, $D_{12}$, $D_{13}$ bzw. $D_{21}$, $D_{22}$, $D_{23}$ zugeführt. Im Hinblick auf eine detaillierte Beschreibung dieser Abtastoptik sei erneut auf die EP 1 762 828 A2 der Anmelderin verwiesen. Der Versatz der beiden Abtastortpaare $RM_1$ und $RM_A$ auf der Maßverkörperung MP wird durch die ablenkende Funktion der Abtastgitter $AG_{11}$, $AG_{12}$, $AG_{13}$, $AG_{14}$ und $AG_{A1}$ - $AG_{A4}$ in X- und Y-Richtung bestimmt und ist in weiten Grenzen wählbar.

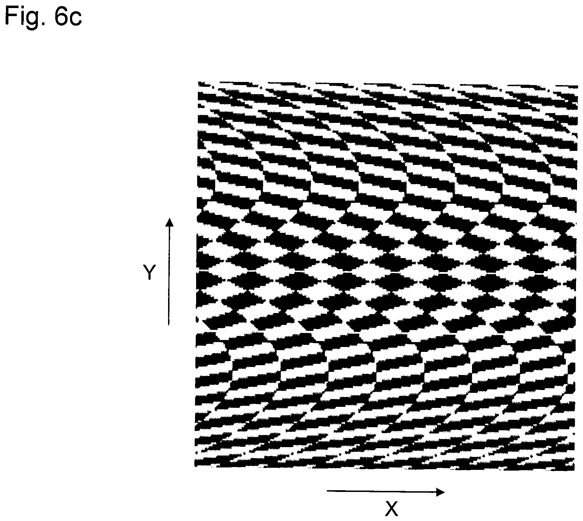

Im Unterschied zur bekannten Abtastung aus der EP 1 762 828 A2 werden im vorliegenden Ausführungsbeispiel des erfindungsgemäßen Positionsmesssystems die Abtastgitter $AG_{11}$ - $AG_{14}$ so modifiziert, dass sie als zweiter Multiplexer mit einer zweifachen Aufspaltung ($M_2 = 2$) wirken, so dass hier $M = M_1 \cdot M2 = 4$ gilt. Die Abtastgitter $AG_{11}$ - $AG_{14}$ werden dazu mit einer zusätzlichen, strahlteilenden Funktion ausgestattet, die aus einem einfallenden Teilstrahlenbündel zwei austretende Teilstrahlenbündel erzeugt. Die beiden austretenden Teilstrahlenbündel werden durch die Auslegung der erfindungsgemäßen Abtastgitter $AG_{11}$ - $AG_{14}$ so geformt, dass die beiden Teilstrahlenbündel wieder durch eine Zylinderlinsenfunktion quer zur Messrichtung fokussiert werden, die zusätzliche Ablenkung aber unterschiedlich ist. So können die Teilstrahlenbündel über Spiegel getrennt auf die Abtastgitter $AG_{A1}$ - $AG_{A4}$ und $AG_{B1}$ - $AG_{B4}$ geleitet werden, die die Teilstrahlenbündel wieder kollimieren und auf getrennte Abtastortpaare $RM_A$ und $RM_B$ auf die Maßverkörperung MP lenken; hierzu sei auf Figur 5a verwiesen. Die entsprechenden Gitterstrukturen der Abtastgitter $AG_{11}$ - $AG_{14}$ sind exemplarisch in Figur 6c dargestellt. Sie setzen sich aus zwei überlagerten Gitterstrukturen zusammen, wie sie in den Figuren 6a und 6b gezeigt sind, die jeweils eines der beiden austretenden Teilstrahlenbündel formen. Mit der Lichtquelle $L_1$ werden damit zwei Paare von Abtasteinheiten betrieben: das erste Paar wird durch die Abtastortpaare $RM_1$ und $RM_A$ gebildet und stellt ein erstes Paar von Abtasteinheiten dar. Das zweite Paar wird durch die Abtastortpaare $RM_1$ und $RM_B$ gebildet und stellt ein zweites Paar von Abtasteinheiten dar. Die Lichtquelle L1 versorgt damit insgesamt vier Abtasteinheiten.

Auch die Abtastgitter $AG_{A1}$ - $AG_{A4}$ werden in analoger Weise als überlagerte Gitterstrukturen ausgebildet. Die wesentliche Funktion der Abtastgitter $AG_{A1}$ - $AG_{A4}$ besteht aber in der Vereinigung der Teilstrahlenbündel, die von einer ersten Lichtquelle $L_1$ ausgehen mit denjenigen, die von einer zweiten Lichtquelle $L_2$ ausgehen. Die Abtastgitter $AG_{A1}$ - $AG_{A4}$ fungieren deshalb als Demultiplexer, ihre Gitterstruktur gleicht derjenigen in Figur 6c.

In Figur 5a sind alle Strahlenbündel und Teilstrahlenbündel zusammen dargestellt. Dabei sind 4 Abtastortpaare $RM_1$, $RM_2$, $RM_A$, $RM_B$ auf der Maßverkörperung MP zu erkennen. Der Lichtquelle $L_1$ sind die Abtastortpaare $RM_1$, $RM_A$ und $RM_B$ zugeordnet, der Lichtquelle $L_2$ die Abtastortpaare $RM_2$, $RM_A$ und $RM_B$. Damit ist der Betrieb von acht Abtasteinheiten mit zwei Lichtquellen $L_1$, $L_2$ und vier Gruppen von Detektoren $D_{11}$, $D_{12}$, $D_{13}$ bzw. $D_{21}$, $D_{22}$, $D_{23}$ bzw. $D_{31}$,

$D_{32}$, $D_{33}$ bzw. $D_{41}$, $D_{42}$, $D_{43}$ möglich.

Der besondere Vorteil dieser Ausführungsform des erfindungsgemäßen Positionsmesssystems liegt darin, dass Abtastgitter gleichzeitig in mehreren Abtasteinheiten verwendet werden. Dies reduziert erheblich die Zahl der notwendigen Abtastgitter, so dass die Anordnung der Abtasteinheiten besonders kompakt möglich ist. Die Abtastorte der einzelnen Abtasteinheiten können damit sehr eng zueinander angeordnet werden. Dies verbessert zudem die Qualität einer Selbstkalibrierung, die mit dieser Anordnung von redundanten Abtasteinheiten möglich ist.

Neben den konkret beschriebenen Ausführungsbeispielen existieren im Rahmen der vorliegenden Erfindung selbstverständlich noch weitere Ausgestaltungsmöglichkeiten.

So ist beispielsweise in der oben erläuterten zweiten Ausführungsform des erfindungsgemäßen Positionsmesssystems der Multiplexer zweistufig in Form eines Strahlteilers und eines Aufspaltgitters ausgebildet. Grundsätzlich können aber sowohl die Multiplexer als auch die Demultiplexer mehrstufig, d.h. kaskadiert aufgebaut werden. Hierzu eignen sich beispielsweise polarisierende oder nicht-polarisierende Strahlteiler, eindimensionale oder zweidimensionale Gitter, Lichtfaserverzweiger (Y-Verzweiger oder mehrkanalige Verzweiger) und Linsenanordnungen, bei denen eine große Linse gegenüber mehreren kleinen Linsen angeordnet ist. Bei einem Multiplexer besteht eine solche Linsenanordnung beispielsweise aus einer großen Linse, die das Lichtbündel einer Lichtleitfaser kollimiert, und das ausgedehnte kollimierte Lichtbündel anschließend durch mehrere, nebeneinander angeordnete kleine Linsen auf mehrere zugeordnete Lichtleitfasern fokussiert wird.

Darüber hinaus kann anstelle der Verwendung mehrerer gepulst betriebener Lichtquellen vorgesehen sein, die von einer einzigen Lichtquelle emittierten Strahlenbündel durch zusätzliche Multiplexer in mehrere Teilstrahlenbündel aufzuspalten und diese Teilstrahlenbündel unterschiedlich lange Verzögerungsstrecken durchlaufen zu lassen. Das heißt, die mehreren, zeitlich nacheinander gepulst betreibbaren Lichtquellen sind in einer solchen Variante des erfindungsgemäßen Positionsmesssystems als Anordnung aus einer einzelnen, gepulst betreibbaren Lichtquelle, einem Aufspaltelement und mehreren Verzögerungsstrecken ausgebildet. Die zueinander verzögerten Teilstrahlenbündel ersetzen hierbei die einzelnen Lichtquellen aus den obigen Ausführungsformen, so dass bei einer derartigen Variante physisch nur eine einzige Lichtquelle im erfindungsgemäßen Positionsmesssystem erforderlich ist. Im Fall einer solchen Ausbildung der Mehrzahl von Lichtquellen liegen somit mehrere virtuelle Lichtquellen im erfindungsgemäßen Positionsmesssystem vor.

## Patentansprüche

1. Positionsmesssystem mit mehreren Abtasteinheiten ($E_{11}$ - $E_{14}$, $E_{21}$ - $E_{24}$) zur optischen Abtastung mindestens einer Maßverkörperung (MP), wobei die Abtasteinheiten ($E_{11}$ - $E_{14}$, $E_{21}$ - $E_{24}$) mit mehreren Lichtquellen ($L_1$, $L_2$, $L_3$) und mehreren Detektoren ($D_{11}$, - $D_{14}$ $D_{21}$ $D_{24}$ $D_{31}$ - $D_{33}$ $D_{41}$ - $D_{43}$) optisch gekoppelt sind,

   wobei

   - zwischen den Abtasteinheiten ($E_{11}$ - $E_{14}$, $E_{21}$ - $E_{24}$) und den Detektoren ($D_{11}$ - $D_{14}$, $D_{21}$ - $D_{24}$, $D_{31}$ - $D_{33}$, $D_{41}$ - $D_{43}$) mehrere Demultiplexer ($DM_{11}$ $D_{13}$, $DM_{21}$ - $DM_{23}$, $DM_{31}$ - $DM_{33}$, $DM_{41}$ - $DM_{43}$) angeordnet sind, über die jeweils mindestens zwei Abtasteinheiten ($E_{11}$ - $E_{14}$, $E_{21}$ - $E_{24}$) mit einem Detektor ($D_{11}$ - $D_{14}$, $D_{21}$ - $D_{24}$, $D_{31}$ - $D_{33}$, $D_{41}$ - $D_{43}$) gekoppelt sind und
   - die Lichtquellen ($L_1$, $L_2$, $L_3$) derart ausgebildet sind, dass diese zeitlich nacheinander gepulst betreibbar sind, wobei die Lichtquellen ($L_1$, $L_2$, $L_3$) über mehrere Multiplexer ($MX_n$, $MX_1$, $MX_2$, $MX_{1a}$ - $MX_{1c}$, $MX_{2a}$ - $MX_{2c}$) mit allen Abtasteinheiten ($E_{11}$ - $E_{14}$, $E_{21}$ - $E_{24}$) gekoppelt sind, die jeweils einen eingangsseitigen primären Beleuchtungskanal einer Lichtquelle ($L_1$, $L_2$, $L_3$) auf mehrere ausgangsseitige sekundäre Beleuchtungskanäle aufspalten und den verschiedenen Abtasteinheiten ($E_{11}$ - $E_{14}$, $E_{21}$- $E_{24}$) zuführen und
   - die Abtasteinheiten ($E_{11}$ - $E_{14}$, $E_{21}$ - $E_{24}$) derart ausgebildet sind, dass pro Abtasteinheit ($E_{11}$ - $E_{14}$, $E_{21}$ - $E_{24}$) mehrere zueinander phasenverschobene optische Abtastsignale erzeugbar sind, die über mehrere primäre Detektionskanäle jeweils den Demultiplexern ($DM_{11}$ - $D_{13}$, $DM_{21}$ - $DM_{23}$, $DM_{31}$ - $DM_{33}$, $DM_{41}$ - $DM_{43}$) eingangsseitig zuführbar sind, die die zugeführten primären Detektionskanäle ausgangsseitig jeweils auf einen sekundären Detektionskanal zusammenfassen und einem zugehörigen Detektor ($D_{11}$ - $D_{14}$, $D_{21}$ - $D_{24}$, $D_{31}$, - $D_{33}$, $D_{41}$ - $D_{43}$) zuführen.

2. Positionsmesssystem nach mindestens einem der vorhergehenden Ansprüche **dadurch gekennzeichnet, dass** zur optischen Kopplung zwischen den Lichtquellen ($L_1$, $L_2$, $L_3$) und den Abtasteinheiten ($E_{11}$ - $E_{14}$, $E_{21}$ - $E_{24}$) Singlemode-Lichtleitfasern angeordnet sind.

3. Positionsmesssystem nach mindestens einem der vorhergehenden Ansprüche **dadurch gekennzeichnet, dass** zur optischen Kopplung zwischen den Abtasteinheiten ($E_{11}$ - $E_{14}$, $E_{21}$ - $E_{24}$) und den Detektoren ($D_{11}$ - $D_{14}$, $D_{21}$ -

$D_{24}$, $D_{31}$, - $D_{33}$, $D_{41}$ - $D_{43}$) Multimode-Lichtleitfasern angeordnet sind.

4. Positionsmesssystem nach Anspruch 1, **dadurch gekennzeichnet, dass** zur optischen Kopplung

   - Freistrahl-Strecken zwischen den Lichtquellen ($L_1$, $L_2$, $L_3$) und den Abtasteinheiten ($E_{11}$ - $E_{14}$, $E_{21}$ - $E_{24}$) ausgebildet sind und/oder
   - Freistrahl-Strecken zwischen den Abtasteinheiten ($E_{11}$ - $E_{14}$, $E_{21}$ - $E_{24}$) und den Detektoren ($D_{11}$ - $D_{14}$, $D_{21}$ - $D_{24}$, $D_3$, - $D_{33}$, $D_{41}$ - $D_{43}$) ausgebildet sind.

5. Positionsmesssystem nach mindestens einem der vorhergehenden Ansprüche **dadurch gekennzeichnet, dass** die Lichtquellen ($L_1$, $L_2$, $L_3$) jeweils Strahlung mit der gleichen Wellenlänge emittieren.

6. Positionsmesssystem nach Anspruch 1, **dadurch gekennzeichnet, dass** die mehreren, zeitliche nacheinander gepulst betreibbaren Lichtquellen ($L_1$, $L_2$. $L_3$) als Anordnung aus einer einzelnen, gepulst betreibbaren Lichtquelle, einem Aufspaltelement und mehreren Verzögerungsstrecken ausgebildet sind.

7. Positionsmesssystem nach Anspruch 1, **dadurch gekennzeichnet, dass** der Multiplexer ($MX_n$, $MX_1$, $MX_2$, $MX_{1a}$ - $MX_{1c}$, $MX_{2a}$ - $MX_{2c}$) als Aufspaltgitter ausgebildet ist, der auf einer Abtastplatte im Abtaststrahlengang angeordnet ist.

8. Positionsmesssystem nach Anspruch 7, **dadurch gekennzeichnet, dass** der Multiplexer ($MX_n$, $MX_1$, $MX_2$, $MX_{1a}$ - $MX_{1c}$, $MX_{2a}$ - $MX_{2c}$) ferner einen Strahlteilerspiegel umfasst.

9. Positionsmesssystem nach Anspruch 8, **dadurch gekennzeichnet, dass** der Demultiplexer ($DM_{11}$ - $D_{13}$, $DM_{21}$ - $DM_{23}$, $DM_{31}$ - $DM_{33}$, $DM_{41}$ - $DM_{43}$) mehrere Gitter umfasst.

10. Positionsmesssystem nach Anspruch 1, **dadurch gekennzeichnet, dass** der Multiplexer ($MX_n$, $MX_1$, $MX_2$, $MX_{1a}$ - $MX_{1c}$, $MX_{2a}$ - $MX_{2c}$) und die Demultiplexer ($DM_{11}$ - $D_{13}$, $DM_{21}$ - $DM_{23}$, $DM_{31}$ - $DM_{33}$, $DM_{41}$- $DM_{43}$) in die Abtastoptik der Abtasteinheit ($E_{11}$ - $E_{14}$, $E_{21}$ - $E_{24}$) integriert ausgebildet sind.

11. Positionsmesssystem nach Anspruch 10, **dadurch gekennzeichnet, dass** einige Abtastgitter der Abtastoptik als Multiplexer ($MX_n$, $MX_1$, $MX_2$, $MX_{1a}$ - $MX_{1c}$, $MX_{2a}$ - $MX_{2c}$) wirken und andere Abtastgitter der Abtastoptik als Demultiplexer ($DM_{11}$ - $D_{13}$, $DM_{21}$ - $DM_{23}$, $DM_{31}$ - $DM_{33}$, $DM_{41}$ - $DM_{43}$) wirken.

12. Verfahren zum Betrieb eines Positionsmesssystems mit mehreren Abtasteinheiten ($E_{11}$ - $E_{14}$, $E_{21}$ - $E_{24}$) zur optischen Abtastung mindestens einer Maßverkörperung (MP), wobei die Abtasteinheiten ($E_{11}$ - $E_{14}$, $E_{21}$ - $E_{24}$) mit mehreren Lichtquellen ($L_1$, $L_2$, $L_3$) und mehreren Detektoren ($D_{11}$

   - $D_{14}$, $D_{21}$ - $D_{24}$, $D_{31}$ - $D_{33}$, $D_{41}$ - $D_{43}$) optisch gekoppelt sind, wobei

   - über mehrere Demultiplexer ($DM_{11}$ - $D_{13}$, $DM_{21}$ - $DM_{23}$, $DM_{31}$ - $DM_{33}$, $DM_{41}$ - $DM_{43}$), die zwischen den Abtasteinheiten ($E_{11}$ - $E_{14}$, $E_{21}$ - $E_{24}$) und den Detektoren ($D_{11}$ - $D_{14}$, $D_{21}$ - $D_{24}$, $D_{31}$ - $D_{33}$, $D_{41}$ - $D_{43}$) angeordnet sind, die zueinander phasenverschobenen Abtastsignale mindestens zweier Abtasteinheiten ($E_{11}$ - $E_{14}$, $E_{21}$ - $E_{24}$) einem Detektor ($D_{11}$ - $D_{14}$, $D_{21}$ - $D_{24}$, $D_{31}$ - $D_{33}$, $D_{41}$ - $D_{43}$) zugeführt werden und
   - die Lichtquellen ($L_1$, $L_2$, $L_3$) zeitlich nacheinander gepulst betrieben werden, wobei die Lichtquellen ($L_1$, $L_2$, $L_3$) über mehrere Multiplexer ($MX_n$, $MX_1$, $MX_2$, $MX_{1a}$ - $MX_{1c}$, $MX_{2a}$ - $MX_{2c}$) mit allen Abtasteinheiten ($E_{11}$ - $E_{14}$, $E_{21}$ - $E_{24}$) gekoppelt sind, über die jeweils ein eingangsseitiger primärer Beleuchtungskanal einer Lichtquelle ($L_1$, $L_2$, $L_3$) auf mehrere ausgangsseitige sekundäre Beleuchtungskanäle aufgespalten und den verschiedenen Abtasteinheiten ($E_{11}$ - $E_{14}$, $E_{21}$ - $E_{24}$) zugeführt wird und
   - die pro Abtasteinheit ($E_{11}$ - $E_{14}$, $E_{21}$ - $E_{24}$) erzeugten mehreren optischen Abtastsignale über mehrere primäre Detektionskanäle jeweils den Demultiplexern ($DM_{11}$ - $D_{13}$, $DM_{21}$ - $DM_{23}$, $DM_{31}$ - $DM_{33}$, $DM_{41}$ - $DM_{43}$) eingangsseitig zugeführt werden, über die die zugeführten primären Detektionskanäle ausgangsseitig jeweils auf einen sekundären Detektionskanal zusammengefasst und einem zugehörigen Detektor ($D_{11}$ - $D_{14}$, $D_{21}$ - $D_{24}$, $D_{31}$ - $D_{33}$, $D_{41}$ - $D_{43}$) zugeführt werden.

**Claims**

1. Position measurement system having a plurality of scanning units ($E_{11}$ - $E_{14}$, $E_{21}$ - $E_{24}$) for optically scanning at least one material measure (MP), wherein the scanning units ($E_{11}$ - $E_{14}$, $E_{21}$ - $E_{24}$) are optically coupled to a plurality of light sources ($L_1$, $L_2$, $L_3$) and a plurality of detectors ($D_{11}$ - $D_{14}$, $D_{21}$ - $D_{24}$, $D_{31}$ - $D_{33}$, $D_{41}$ - $D_{43}$), wherein

- arranged between the scanning units ($E_{11}$ - $E_{14}$, $E_{21}$ - $E_{24}$) and the detectors ($D_{11}$ - $D_{14}$, $D_{21}$ - $D_{24}$, $D_{31}$ - $D_{33}$, $D_{41}$ - $D_{43}$) are a plurality of demultiplexers ($DM_{11}$ $D_{13}$, $DM_{21}$ - $DM_{23}$, $DM_{31}$ - $DM_{33}$, $DM_{41}$ - $DM_{43}$), via which in each case at least two scanning units ($E_{11}$ - $E_{14}$, $E_{21}$ - $E_{24}$) are coupled to a detector ($D_{11}$ - $D_{14}$, $D_{21}$ - $D_{24}$, $D_{31}$ - $D_{33}$, $D_{41}$ - $D_{43}$), and
- the light sources ($L_1$, $L_2$, $L_3$) are configured such that they are operable in temporally successively pulsed fashion, wherein the light sources ($L_1$, $L_2$, $L_3$) are coupled, via a plurality of multiplexers ($MX_n$, $MX_1$, $MX_2$, $MX_{1a}$ - $MX_{1c}$, $MX_{2a}$ - $MX_{2c}$), to all scanning units ($E_{11}$ - $E_{14}$, $E_{21}$ - $E_{24}$), which split in each case one entry-side primary illumination channel of a light source ($L_1$, $L_2$, $L_3$) into a plurality of exit-side secondary illumination channels and supply them to the various scanning units ($E_{11}$ - $E_{14}$, $E_{21}$ - $E_{24}$), and
- the scanning units ($E_{11}$ - $E_{14}$, $E_{21}$ - $E_{24}$) are configured such that a plurality of mutually phase-shifted optical scanning signals are generatable per scanning unit ($E_{11}$ - $E_{14}$, $E_{21}$ - $E_{24}$), which are suppliable on the entry side, via a plurality of primary detection channels, in each case to the demultiplexers ($DM_{11}$ - $D_{13}$, $DM_{21}$ - $DM_{23}$, $DM_{31}$ - $DM_{33}$, $DM_{41}$ - $DM_{43}$), which combine the supplied primary detection channels on the exit side in each case to a secondary detection channel and supply them to an associated detector ($D_{11}$ - $D_{14}$, $D_{21}$ - $D_{24}$, $D_{31}$ - $D_{33}$, $D_{41}$ - $D_{43}$).

2. Position measurement system according to at least one of the preceding claims, **characterized in that** single-mode optical fibres are arranged for optically coupling between the light sources ($L_1$, $L_2$, $L_3$) and the scanning units ($E_{11}$ - $E_{14}$, $E_{21}$ - $E_{24}$).

3. Position measurement system according to at least one of the preceding claims, **characterized in that** multi-mode optical fibres are arranged for optically coupling between the scanning units ($E_{11}$ - $E_{14}$, $E_{21}$ - $E_{24}$) and the detectors ($D_{11}$ - $D_{14}$, $D_{21}$ - $D_{24}$, $D_{31}$ - $D_{33}$, $D_{41}$ - $D_{43}$).

4. Position measurement system according to Claim 1, **characterized in that**, for optically coupling,

- free-beam sections are formed between the light sources ($L_1$, $L_2$, $L_3$) and the scanning units ($E_{11}$ - $E_{14}$, $E_{21}$ - $E_{24}$), and/or
- free-beam sections are formed between the scanning units ($E_{11}$ - $E_{14}$, $E_{21}$ - $E_{24}$) and the detectors ($D_{11}$ - $D_{14}$, $D_{21}$ - $D_{24}$, $D_{31}$ - $D_{33}$, $D_{41}$ - $D_{43}$).

5. Position measurement system according to at least one of the preceding claims, **characterized in that** the light sources ($L_1$, $L_2$, $L_3$) emit in each case radiation having the same wavelength.

6. Position measurement system according to Claim 1, **characterized in that** the plurality of light sources ($L_1$, $L_2$, $L_3$) which are operable in temporally successively pulsed fashion are configured as an arrangement of a single light source which is operable in pulsed fashion, a splitting element and a plurality of delay sections.

7. Position measurement system according to Claim 1, **characterized in that** the multiplexer ($MX_n$, $MX_1$, $MX_2$, $MX_{1a}$ - $MX_{1c}$, $MX_{2a}$ - $MX_{2c}$) is configured as a splitting grating which is arranged on a scanning plate in the scanning beam path.

8. Position measurement system according to Claim 7, **characterized in that** the multiplexer ($MX_n$, $MX_1$, $MX_2$, $MX_{1a}$ - $MX_{1c}$, $MX_{2a}$ - $MX_{2c}$) furthermore comprises a beam splitter mirror.

9. Position measurement system according to Claim 8, **characterized in that** the demultiplexer ($DM_{11}$ - $D_{13}$, $DM_{21}$ - $DM_{23}$, $DM_{31}$ - $DM_{33}$, $DM_{41}$ - $DM_{43}$) comprises a plurality of gratings.

10. Position measurement system according to Claim 1, **characterized in that** the multiplexer ($MX_n$, $MX_1$, $MX_2$, $MX_{1a}$ - $MX_{1c}$, $MX_{2a}$ - $MX_{2c}$) and the demultiplexers ($DM_{11}$ - $D_{13}$, $DM_{21}$ - $DM_{23}$, $DM_{31}$ - $DM_{33}$, $DM_{41}$ - $DM_{43}$) are integrated in the scanning optical unit of the scanning unit ($E_{11}$ - $E_{14}$, $E_{21}$ - $E_{24}$).

11. Position measurement system according to Claim 10, **characterized in that** some scanning gratings of the scanning optical unit act as multiplexers ($MX_n$, $MX_1$, $MX_2$, $MX_{1a}$ - $MX_{1c}$, $MX_{2a}$ - $MX_{2c}$), and other scanning gratings of the scanning optical unit act as demultiplexers ($DM_{11}$ - $D_{13}$, $DM_{21}$ - $DM_{23}$, $DM_{31}$ - $DM_{33}$, $DM_{41}$ - $DM_{43}$).

12. Method for operating a position measurement system having a plurality of scanning units ($E_{11}$ - $E_{14}$, $E_{21}$ - $E_{24}$) for optically scanning at least one material measure (MP), wherein the scanning units ($E_{11}$ - $E_{14}$, $E_{21}$

- $E_{24}$) are optically coupled to a plurality of light sources ($L_1$, $L_2$, $L_3$) and a plurality of detectors ($D_{11}$ - $D_{14}$, $D_{21}$ - $D_{24}$, $D_{31}$ - $D_{33}$, D41 - $D_{43}$),

wherein

- the mutually phase-shifted scanning signals of at least two scanning units ($E_{11}$ - $E_{14}$, $E_{21}$ - $E_{24}$) are supplied to a detector ($D_{11}$ - $D_{14}$, $D_{21}$ - $D_{24}$, $D_{31}$ - $D_{33}$, $D_{41}$ - $D_{43}$) via a plurality of demultiplexers ($DM_{11}$ - $D_{13}$, $DM_{21}$ - $DM_{23}$, $DM_{31}$ - $DM_{33}$, $DM_{41}$ - $DM_{43}$), which are arranged between the scanning units ($E_{11}$ - $E_{14}$, $E_{21}$ - $E_{24}$) and the detectors ($D_{11}$ - $D_{14}$, $D_{21}$ - $D_{24}$, $D_{31}$ - $D_{33}$, $D_{41}$ - $D_{43}$), and - the light sources ($L_1$, $L_2$, $L_3$) are operated in temporally successively pulsed fashion, wherein the light sources ($L_1$, $L_2$, $L_3$) are coupled, via a plurality of multiplexers ($MX_n$, $MX_1$, $MX_2$, $MX_{1a}$ - $MX_{1c}$, $MX_{2a}$ - $MX_{2c}$), to all scanning units ($E_{11}$ - $E_{14}$, $E_{21}$ - $E_{24}$), via which in each case one entry-side primary illumination channel of a light source ($L_1$, $L_2$, $L_3$) is split into a plurality of exit-side secondary illumination channels and is supplied to the various scanning units ($E_{11}$ - $E_{14}$, $E_{21}$ - $E_{24}$), and - the plurality of optical scanning signals generated per scanning unit ($E_{11}$ - $E_{14}$, $E_{21}$ - $E_{24}$) are supplied on the entry-side via a plurality of primary detection channels in each case to the demultiplexers ($DM_{11}$ - $D_{13}$, $DM_{21}$ - $DM_{23}$, $DM_{31}$ - $DM_{33}$, $DM_{41}$ - $DM_{43}$), via which the supplied primary detection channels on the exit side are combined in each case to a secondary detection channel and are supplied to an associated detector ($D_{11}$ - $D_{14}$, $D_{21}$ - $D_{24}$, $D_{31}$ - $D_{33}$, $D_{41}$ - $D_{43}$).

## Revendications

1. Système de mesure de position comprenant plusieurs unités de palpage ($E_{11}$ - $E_{14}$, $E_{21}$ - $E_{24}$) destinées au palpage optique d'au moins un étalon (MP), les unités de palpage ($E_{11}$ - $E_{14}$, $E_{21}$ - $E_{24}$) étant couplées optiquement avec plusieurs sources de lumière ($L_1$, $L_2$, $L_3$) et plusieurs détecteurs ($D_{11}$ - $D_{14}$, $D_{21}$ - $D_{24}$, $D_{31}$ - $D_{33}$, $D_{41}$ - $D_{43}$),

- plusieurs démultiplexeurs ($DM_{11}$ - $D_{13}$, $DM_{21}$ - $DM_{23}$, $DM_{31}$ - $DM_{33}$, $DM_{41}$ - $DM_{43}$) étant disposée entre les unités de palpage ($F_{11}$ - $E_{14}$, $E_{21}$ - $E_{24}$) et les détecteurs ($D_{11}$ - $D_{14}$, $D_{21}$ - $D_{24}$, $D_{31}$ - $D_{33}$, $D_{41}$ - $D_{43}$), par le biais desquels au moins deux unités de palpage ($E_{11}$ - $E_{14}$, $E_{21}$ - $E_{24}$) sont respectivement couplées à un détecteur ($D_{11}$ - $D_{14}$, $D_{21}$ - $D_{24}$, $D_{31}$ - $D_{33}$, $D_{11}$ - $D_{43}$) et
- les sources de lumière ($L_1$, $L_2$, $L_3$) étant configurées de telle sorte que celles-ci peuvent fonctionner de manière pulsée chronologiquement les unes après les autres, les sources de lumière ($L_1$, $L_2$, $L_3$) étant couplées à toutes les unités de palpage ($E_{11}$ - $E_{14}$, $E_{21}$ - $E_{24}$) par le biais de plusieurs multiplexeurs ($MX_0$, $MX_1$, $MX_2$, $MX_{1a}$ - $MX_{1c}$, $MX_{2a}$ - $MX_{2c}$), lesquels dissocient respectivement un canal d'éclairage primaire côté entrée d'une source de lumière ($L_1$, $L_2$, $L_3$) en plusieurs canaux d'éclairage secondaires côté sortie et les acheminent aux différentes unités de palpage ($E_{11}$ - $E_{14}$, $E_{21}$ - $E_{24}$) et
- les unités de palpage ($E_{11}$ - $E_{14}$, $E_{21}$ - $E_{24}$) étant configurées de telle sorte que plusieurs signaux de palpage optiquement déphasés peuvent être générés par unité de palpage ($E_{11}$ - $E_{14}$, $E_{21}$ - $E_{24}$), lesquels peuvent être acheminés par le biais de plusieurs canaux de détection primaires du côté entrée des démultiplexeurs ($DM_{11}$ - $D_{13}$, $DM_{21}$ - $DM_{23}$, $DM_{31}$ - $DM_{33}$, $DM_{41}$ - $DM_{43}$), qui regroupent les canaux de détection primaires acheminés respectivement sur un canal de détection secondaire et l'acheminent à un détecteur ($D_{11}$ - $D_{14}$, $D_{21}$ - $D_{24}$, $D_{31}$ - $D_{33}$, $D_{41}$ - $D_{43}$) associé.

2. Système de mesure de position selon au moins l'une des revendications précédentes, **caractérisé en ce que** des fibres optiques monomodales sont installées pour le couplage optique entre les sources de lumière ($L_1$, $L_2$, $L_3$) et les unités de palpage ($E_{11}$ - $E_{14}$, $E_{21}$ - $E_{24}$).

3. Système de mesure de position selon au moins l'une des revendications précédentes, **caractérisé en ce que** des fibres optiques multimodales sont installées pour le couplage optique entre les unités de palpage ($E_{11}$ - $E_{14}$, $E_{21}$ - $E_{24}$) et les détecteurs ($D_{11}$ - $D_{14}$, $D_{21}$ - $D_{24}$, D31 - $D_{33}$, $D_{41}$ - $D_{43}$).

4. Système de mesure de position selon au moins la revendication 1, **caractérisé en ce que** pour le couplage optique,

- des trajets de faisceau libre sont formés entre les sources de lumière ($L_1$, $L_2$, $L_3$) et les unités de palpage ($E_{11}$ - $E_{14}$, $E_{21}$ - $E_{24}$)
et/ou
- des trajets de faisceau libre sont formés entre les unités de palpage ($E_{11}$ - $E_{14}$, $E_{21}$ - $E_{24}$) et les détecteurs ($D_{11}$ - $D_{14}$, $D_{21}$ - $D_{24}$, $D_{31}$ - $D_{33}$, $D_{41}$ - $D_{43}$).

5. Système de mesure de position selon au moins l'une des revendications précédentes, **caractérisé en ce que** les sources de lumière ($L_1$, $L_2$, $L_3$) émettent respectivement un rayonnement ayant la même longueur d'onde.

6. Système de mesure de position selon au moins l'une des revendications précédentes, **caractérisé en ce que** les sources de lumière ($L_1$, $L_2$, $L_3$) qui peuvent fonctionner de manière pulsée chronologiquement les unes après les autres sont réalisées sous la forme d'un arrangement d'une source de lumière pouvant fonctionner de manière pulsée unique, d'un élément de dissociation et de plusieurs trajets de retard.

7. Système de mesure de position selon la revendication 1, **caractérisé en ce que** le multiplexeur ($MX_0$, $MX_1$, $MX_2$, $MX_{1a}$ - $MX_{1c}$, $MX_{2a}$ - $MX_{2c}$) est réalisé sous la forme d'une grille de dissociation qui est disposée sur une plaque de palpage dans le trajet de faisceau de palpage.

8. Système de mesure de position selon la revendication 7, **caractérisé en ce que** le multiplexeur ($MX_0$, $MX_1$, $MX_2$, $MX_{1a}$ - $MX_{1c}$, $MX_{2a}$ - $MX_{2c}$) comprend en outre un miroir diviseur de faisceau.

9. Système de mesure de position selon la revendication 8, **caractérisé en ce que** le démultiplexeur ($DM_{11}$ - $D_{13}$, $DM_{21}$ - $DM_{23}$, $DM_{31}$ - $DM_{33}$, $DM_{41}$ - $DM_{43}$) comprend plusieurs grilles.

10. Système de mesure de position selon la revendication 1, **caractérisé en ce que** le multiplexeur ($MX_0$, $MX_1$, $MX_2$, $MX_{1a}$ - $MX_{1c}$, $MX_{2a}$ - $MX_{2c}$) et les démultiplexeurs ($DM_{11}$ - $D_{13}$, $DM_{21}$ - $DM_{23}$, $DM_{31}$ - $DM_{33}$, $DM_{41}$ - $DM_{43}$) sont réalisés intégrés dans l'optique de palpage de l'unité de palpage ($E_{11}$ - $E_{14}$, $E_{21}$ - $E_{24}$).

11. Système de mesure de position selon la revendication 10, **caractérisé en ce que** certaines grilles de palpage de l'optique de palpage agissent comme des multiplexeurs ($MX_0$, $MX_1$, $MX_2$, $MX_{1a}$ - $MX_{1c}$, $MX_{2a}$ - $MX_{2c}$) et les autres grilles de palpage de l'optique de palpage agissent comme des démultiplexeurs ($DM_{11}$ - $D_{13}$, $DM_{21}$ - $DM_{23}$, $DM_{31}$ - $DM_{33}$, $DM_{41}$ - $DM_{43}$).

12. Procédé pour faire fonctionner un système de mesure de position comprenant plusieurs unités de palpage ($E_{11}$ - $E_{14}$, $E_{21}$ - $E_{24}$) destinées au palpage optique d'au moins un étalon (MP), les unités de palpage ($E_{11}$ - $E_{14}$, $E_{21}$ - $E_{24}$) étant couplées optiquement avec plusieurs sources de lumière ($L_1$, $L_2$, $L_3$) et plusieurs détecteurs ($D_{11}$ - $D_{14}$, $D_{21}$ - $D_{24}$, $D_{31}$ - $D_{33}$, $D_{41}$ - $D_{43}$),

- les signaux de palpage mutuellement déphasés d'au moins deux unités de palpage ($E_{11}$ - $E_{14}$, $E_{21}$ - $E_{24}$) sont acheminés à un détecteur ($D_{11}$ - $D_{14}$, $D_{21}$ - $D_{24}$, $D_{31}$ - $D_{33}$, $D_{41}$ - $D_{43}$) par le biais de plusieurs démultiplexeurs ($DM_{11}$ - $D_{13}$, $DM_{21}$ - $DM_{23}$, $DM_{31}$ - $DM_{33}$, $DM_{41}$ - $DM_{43}$) qui sont disposée entre les unités de palpage ($E_{11}$ - $E_{14}$, $E_{21}$ - $E_{24}$) et les détecteurs ($D_{11}$ - $D_{14}$, $D_{21}$ - $D_{24}$, $D_{31}$ - $D_{33}$, $D_{41}$ - $D_{43}$) et
- les sources de lumière ($L_1$, $L_2$, $L_3$) fonctionnent de manière pulsée chronologiquement les unes après les autres, les sources de lumière ($L_1$, $L_2$, $L_3$) étant couplées à toutes les unités de palpage ($E_{11}$ - $E_{14}$, $E_{21}$ - $E_{24}$) par le biais de plusieurs multiplexeurs ($MX_0$, $MX_1$, $MX_2$, $MX_{1a}$ - $MX_{1c}$, $MX_{2a}$ - $MX_{2c}$), par le biais desquels un canal d'éclairage primaire côté entrée d'une source de lumière ($L_1$, $L_2$, $L_3$) est respectivement dissocié en plusieurs canaux d'éclairage secondaires côté sortie et acheminé aux différentes unités de palpage ($E_{11}$ - $E_{14}$, $E_{21}$ - $E_{24}$) et
- les plusieurs signaux de palpage optique générés par unité de palpage ($E_{11}$ - $E_{14}$, $E_{21}$ - $E_{24}$) sont respectivement acheminés par le biais de plusieurs canaux de détection primaires du côté entrée des démultiplexeurs ($DM_{11}$ - $D_{13}$, $DM_{21}$ - $DM_{23}$, $DM_{31}$ - $DM_{33}$, $DM_{41}$ - $DM_{43}$), par le biais desquels les canaux de détection primaires acheminés sont respectivement regroupés sur un canal de détection secondaire et acheminés à un détecteur ($D_{11}$ - $D_{14}$, $D_{21}$ - $D_{24}$, $D_{31}$ - $D_{33}$, $D_{41}$ - $D_{43}$) associé.

FIG. 1

FIG. 2

**FIG. 3a**

**FIG. 3b**

## Fig. 4a

## Fig. 4b

Fig. 4c

## Fig. 4d

## Fig. 4e

Fig. 5a

Fig. 5b

Fig. 6a

Fig. 6b

Fig. 6c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3526049 A1
- US 5408091 A
- US 5498867 A
- US 4546466 A
- EP 1989577 A2
- EP 1762828 A2